Europäisches Patentamt

European Patent Office

Office européen des brevets

(19)

(11) EP 1 012 627 B1

(12) EUROPÄISCHE PATENTSCHRIFT

(45) Veröffentlichungstag und Bekanntmachung des Hinweises auf die Patenterteilung:
**23.10.2002 Patentblatt 2002/43**

(51) Int Cl.[7]: **G01S 17/50**, G01S 7/51, G01S 7/497, G01S 7/48, G01S 7/486, G01S 7/481

(21) Anmeldenummer: **98939789.8**

(22) Anmeldetag: **04.09.1998**

(86) Internationale Anmeldenummer:
**PCT/IB98/01372**

(87) Internationale Veröffentlichungsnummer:
**WO 99/013356 (18.03.1999 Gazette 1999/11)**

(54) **OPTO-ELEKTRONISCHES MESSVERFAHREN UND OPTO-ELEKTRONISCHE MESSEINRICHTUNG**

OPTOELECTRONIC MEASURING METHOD AND AN OPTOELECTRONIC MEASURING DEVICE

PROCEDE DE MESURE OPTOELECTRONIQUE ET DISPOSITIF DE MESURE OPTOELECTRONIQUE

(84) Benannte Vertragsstaaten:
**AT CH DE DK FR GB IE LI NL SE**

(30) Priorität: **10.09.1997 AT 152597**
**22.10.1997 AT 178297**
**31.10.1997 AT 184597**
**31.10.1997 AT 184697**
**20.02.1998 AT 30598**

(43) Veröffentlichungstag der Anmeldung:
**28.06.2000 Patentblatt 2000/26**

(73) Patentinhaber: **Riegl Laser Measurement Systems Gmbh**
**3580 Horn (AT)**

(72) Erfinder:
• **RIEGL, Johannes**
**A-3754 Trabenreith (AT)**
• **ULLRICH, Andreas**
**A-3003 Gablitz (AT)**
• **SCHWARZ, Roland**
**A-1140 Wien (AT)**

(74) Vertreter: **Révy von Belvárd, Peter et al**
**Büchel, von Révy & Partner**
**Patentanwälte,**
**Im Zedernpark**
**Bronschhoferstrasse 31**
**9500 Wil (CH)**

(56) Entgegenhaltungen:
**WO-A-90/12330          WO-A-91/13319**
**DE-A- 3 130 966          GB-A- 1 315 533**
**US-A- 4 527 894          US-A- 4 751 929**
**US-A- 4 866 438          US-A- 4 906 092**
**US-A- 5 302 956          US-A- 5 337 358**
**US-A- 5 471 215          US-A- 5 563 590**
**US-A- 5 621 514**

EP 1 012 627 B1

**Beschreibung**

Die Erfindung betrifft ein opto-elektronisches Meßverfahren nach dem Oberbegriff des Anspruches 1 sowie auf eine opto-elektronische Meßeinrichtung mit den Oberbegriffsmerkmalen des Anspruches 7.

Derartige Meßverfahren sind bisher für Entfernungsmeßgeräte bzw. sogenannten Rangefindern eingesetzt worden. Die Einführung der Digitaltechnik bei solchen Meßgeräten hat es u.a. ermöglicht, die Sendeleistung bei gegebener Reichweite zu reduzieren und damit bei Verwendung von Lasern als Sendeeinrichtung die Augensicherheit zu verbessern. Ein weiterer Vorzug solcher Geräte besteht darin, daß für die Sende- und die Empfangseinrichtung Optiken mit kleinerer Apertur und damit auch kleineren Hauptabmessungen eingesetzt werden können, was sich wieder auf die Abmessungen der Geräte und deren Gewicht positiv auswirkt. Ein weiterer Vorteil ist schließlich in dem geringeren Leistungsbedarf zu sehen, der wieder eine Reduktion der Batteriekapazität und damit Verringerung des Batterievolumens und -gewichtes gestattet.

Versuche, diese Digitaltechnik auch auf andere opto-elektronische Meßsysteme, insbesondere auf Geschwindigkeitsmeßsysteme anzuwenden, hat bisher aus einer ganzen Reihe von Gründen nicht zu einem positiven Ergebnis geführt.

Nun beschreibt die US-A-5,471,215 eine Radarvorrichtung zur Messung von Entfernung und Geschwindigkeit, welche die Oberbegriffsmerkmale des Anspruches 1 bzw. des Anspruches 7 aufweist. Allerdings stehen einer vernünftigen Auswertung oftmals die tatsächlichen Abtastkapazitäten der zur Verfügung stehenden Prozessoren und Einrichtungen entgegen.

Es ist ein Ziel der Erfindung, die bisher einer Anwendung der Digitaltechnik bei optoelektronischen Geschwindigkeitsmeßeinrichtungen entgegenstehenden Probleme zu überwinden, so daß auch bei diesen Systemen die oben skizzierten Vorteile zum Tragen kommen können, insbesondere aber auch eine hohe Abtastrate zur Verbesserung der Genauigkeit zu ermöglichen. Dieses Ziel wird durch die kennzeichnenden Merkmale der Ansprüche 1 und 7 erreicht.

Weitere Merkmale der Erfindung ergeben sich aus den Patentansprüchen, in welchen zahlreiche Varianten und Ausgestaltungen der Erfindung beschrieben sind, sowie aus der Beschreibung einiger Ausführungsbeispiele und unter Bezugnahme auf die Zeichnung.

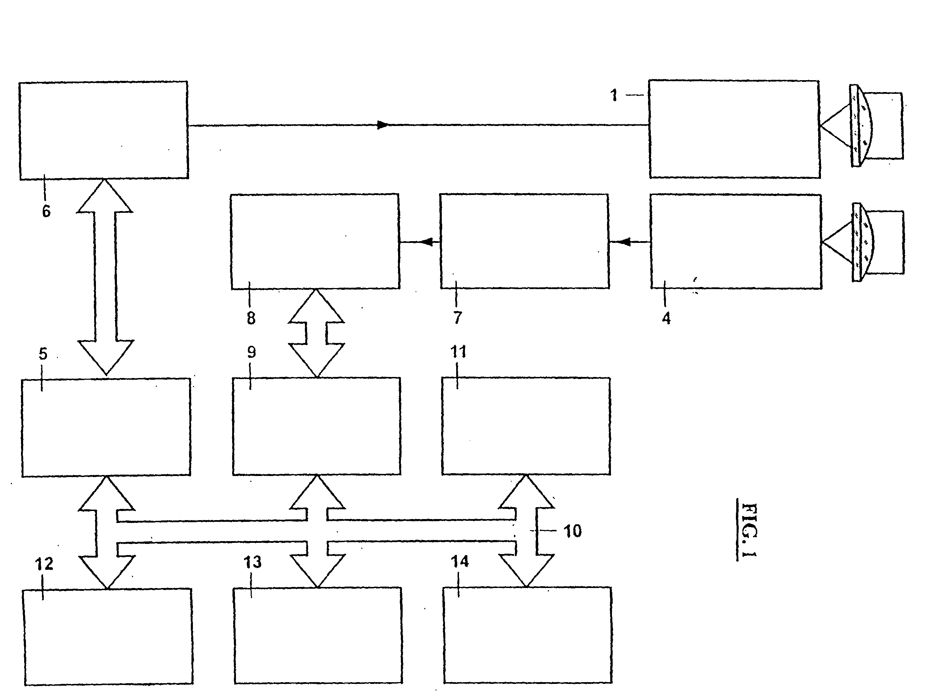

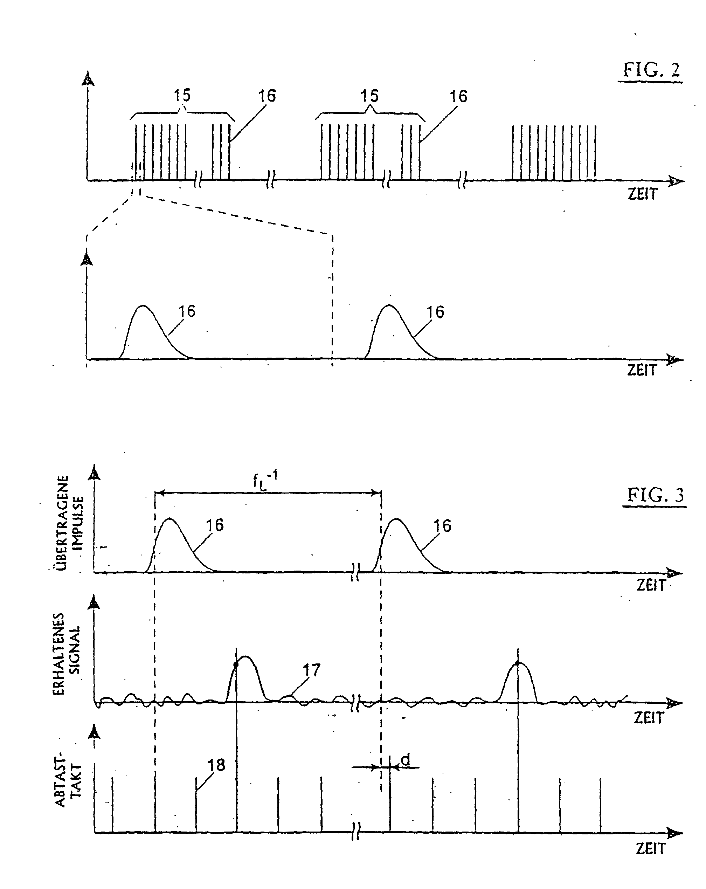

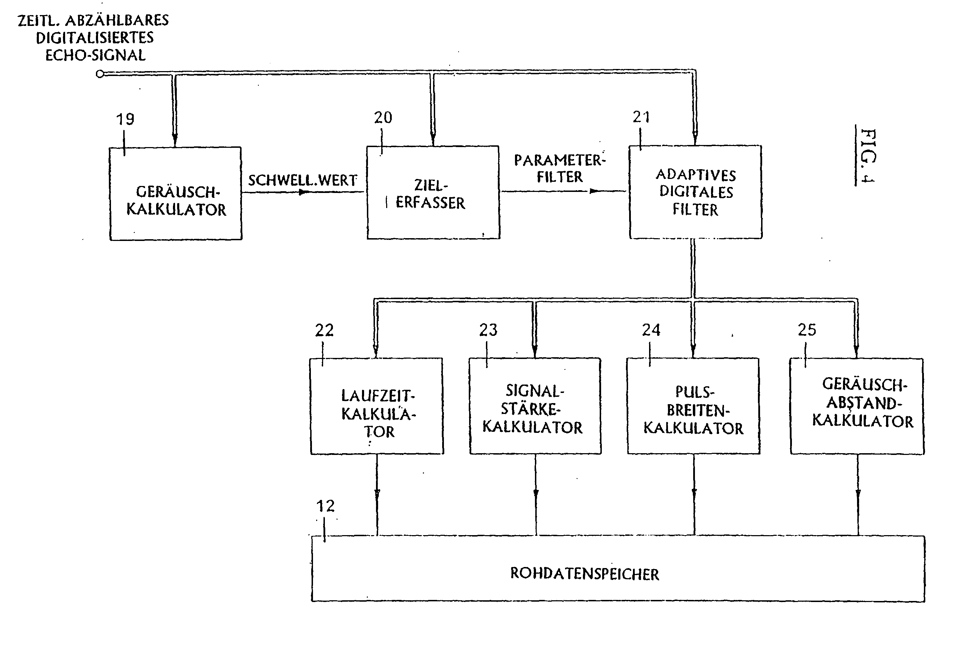

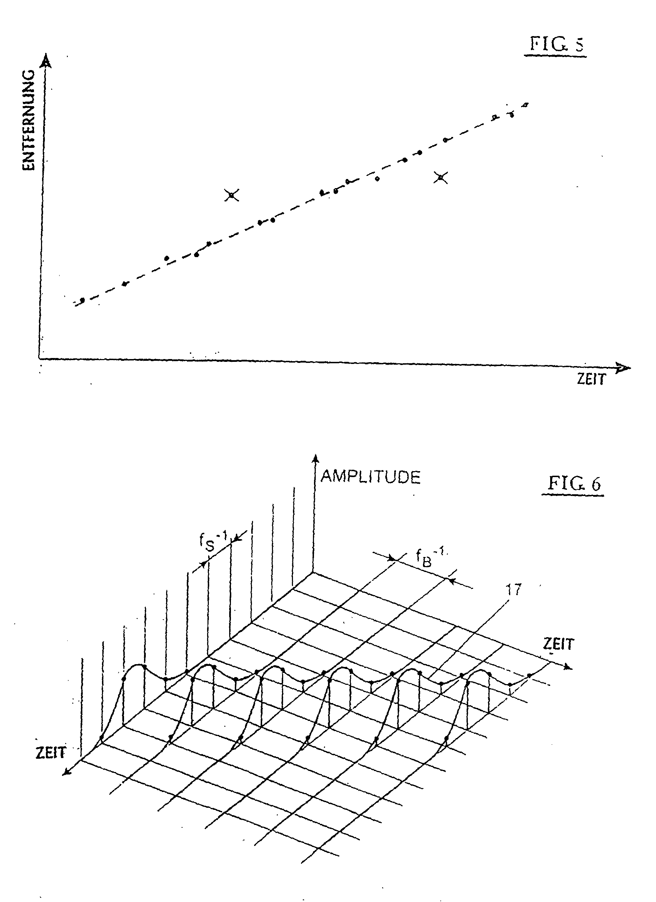

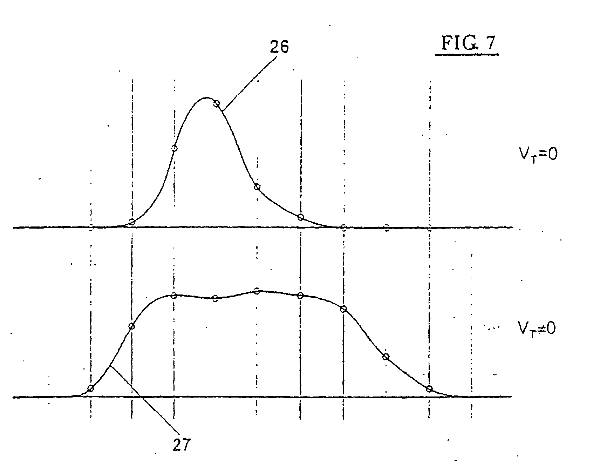

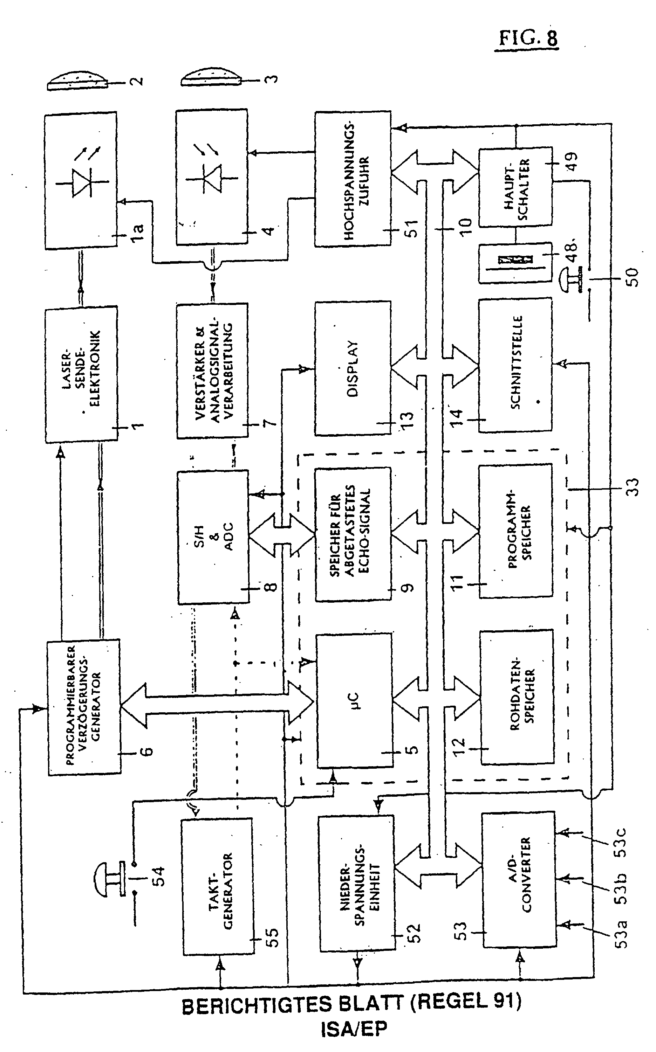

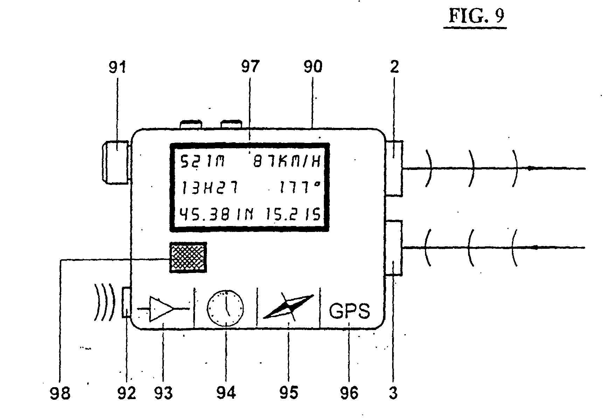

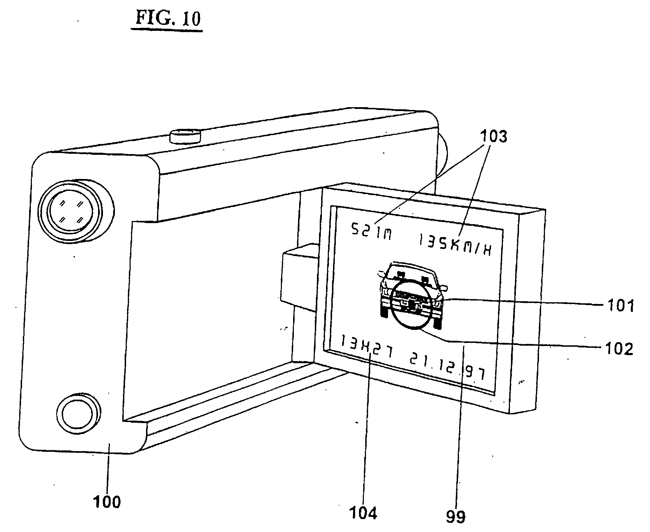

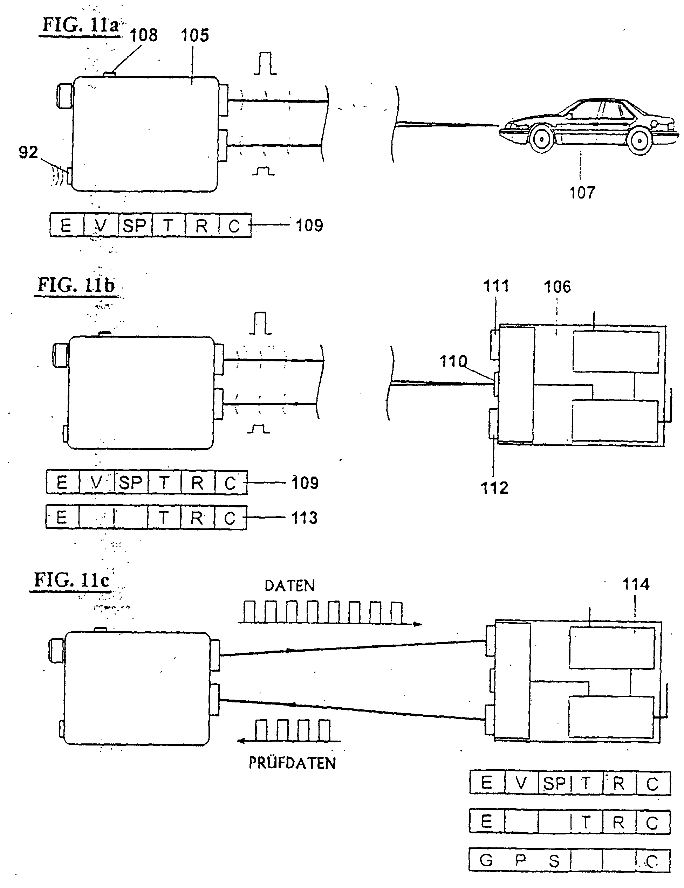

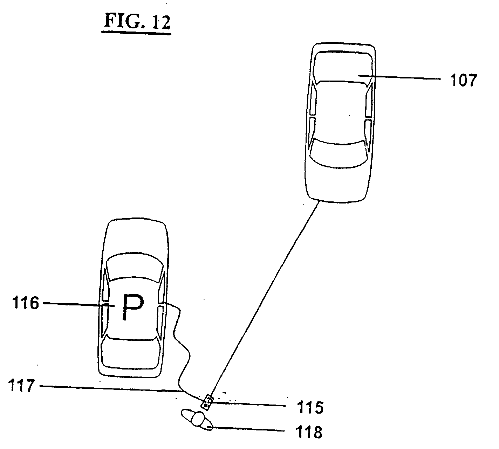

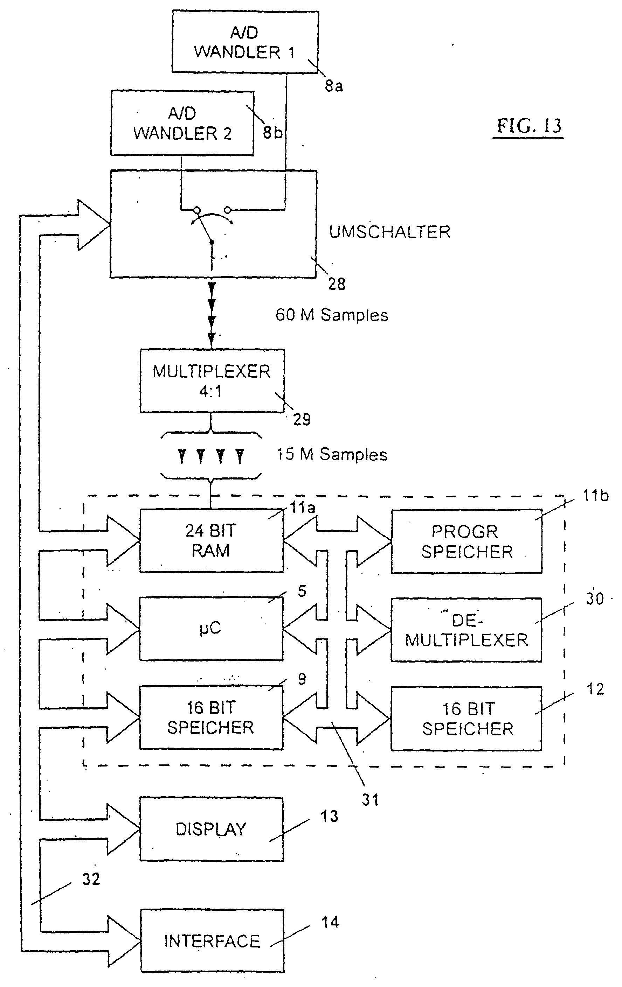

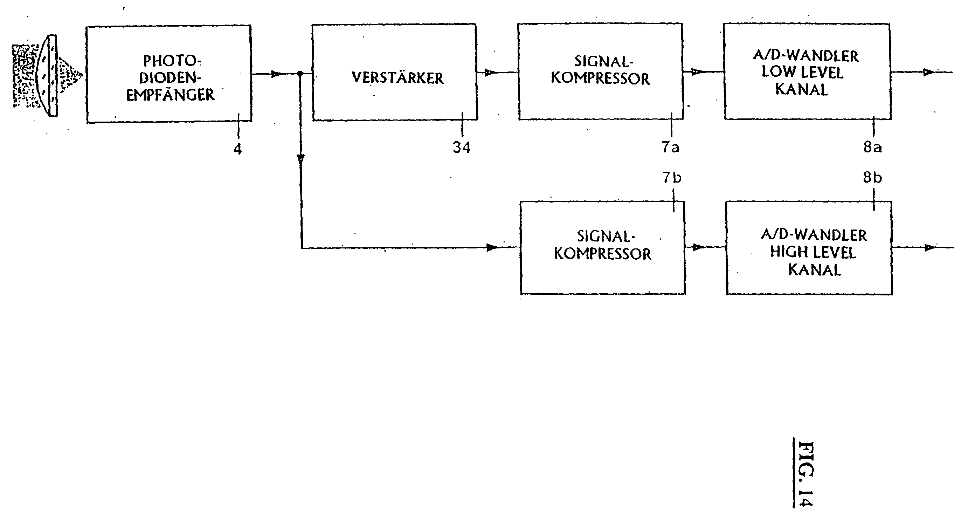

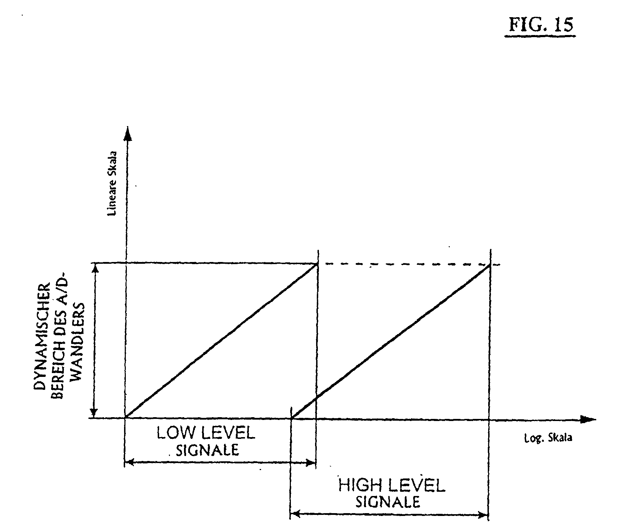

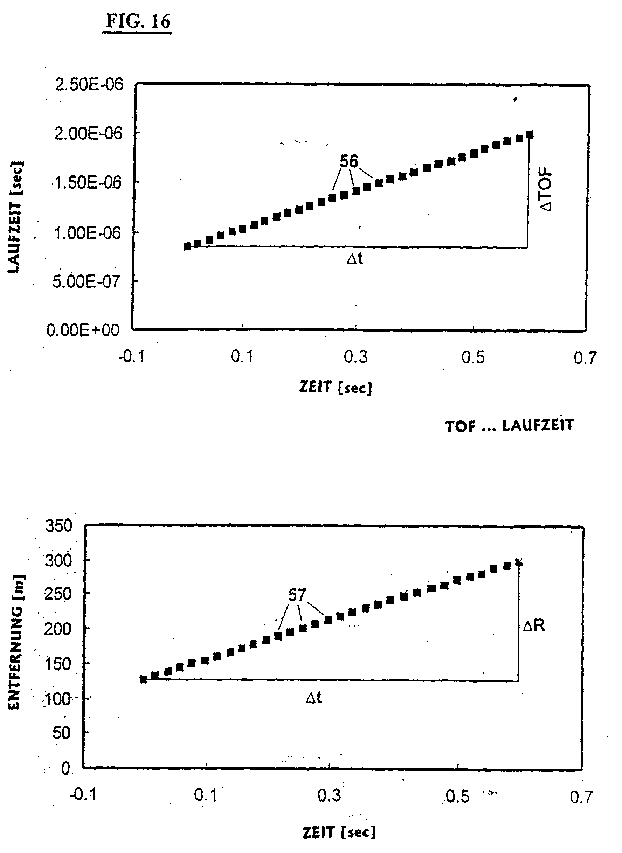

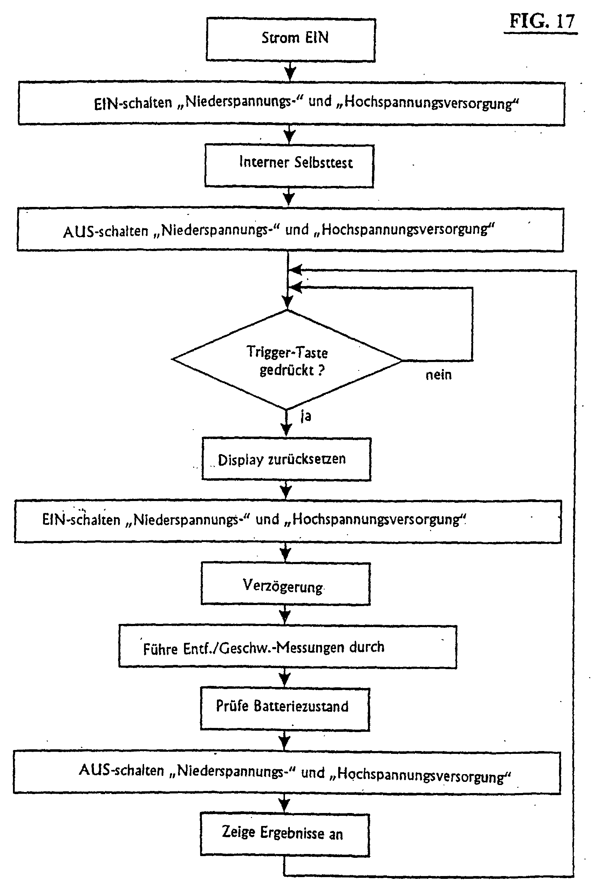

In Fig. 1 der Zeichnung ist ein Blockdiagramm der erfindungsgemäßen Meßeinrichtung dargestellt, die Figuren 2 und 3 zeigen Diagramme der Sende- und Empfangsimpulse. Die Fig. 4 veranschaulicht ein Blockschema des elektronischen Rechners bzw. seines Programmaufbaues. Die Fig. 5 veranschaulicht ein Diagramm der verschiedenen zeitdiskreten, für die einzelnen Bursts ermittelten Entfernungswerte, aus welchen die Zielgeschwindigkeit berechnet wird. Die Fig. 6 zeigt schließlich schematisch die verschiedenen aus den Empfangssignalen der einzelnen Bursts rekonstruierten Empfangsimpulse. Die Fig. 7 zeigt die Empfangsimpulse eines stationären und eines relativ schnell bewegten Zieles. Die Fig. 8 zeigt schematisch das Blockschaltbild einer möglichen Ausführungsform der erfindungsgemäßen Geschwindigkeitsmeßeinrichtung. Die Fig. 9 veranschaulicht, ebenfalls schematisch, den Aufbau einer solchen Einrichtung. In Fig. 10 ist eine weitere Ausführungsform der Erfindung dargestellt. Die Fig. 11 zeigt schließlich ein Meßsystem in den verschiedenen Phasen eines Meßzyklus. In Fig. 12 ist eine Variante des oben gezeigten Systems im Einsatz veranschaulicht. Die Fig. 13 zeigt in Form eines Blockschaltbildes Details der Signalverarbeitungs- und Meßwert-Berechnungsstufe. In Fig. 14 ist, wieder in Form eines Blockschaltbildes die Empfangseinrichtung einschließlich der Signal-Processing-Stufe und des Analog-/Digital-Converters gezeigt. Die Fig. 15 veranschaulicht in einem Diagramm die Arbeitsweise der in Fig. 14 gezeigten Einrichtung. Die Fig. 16 zeigt in einem Diagramm die TOF- bzw. die Entfernungsmeßwerte als Funktion der Meßzeit. In Fig. 17 ist schließlich ein Flußdiagramm gezeigt, welches die selektive Zu- und Abschaltung der verschiedenen Gerätekomponenten veranschaulicht.

Die Figur 1 zeigt in Form eines Blockdiagrammes schematisch den Aufbau eines Laser-Geschwindigkeitsmeßsystems gemäß der Erfindung. Mit 1 ist ein Laser-Transmitter bezeichnet, der eine Laserdiode aufweist, welcher eine Optik 2 vorgeschaltet ist, die die Emitterzone des Lasers vorzugsweise ins Unendliche abbildet. Neben der Sendeoptik 2 ist eine Empfängeroptik 3 vorgesehen, deren optische Achse parallel zu der der Sendeoptik 2 ausgerichtet ist. Die Empfängeroptik 3 konzentriert die von einem im Strahlengang der Sendeoptik befindlichem Objekt bzw. Ziel im allgemeinen diffus reflektierte Strahlung auf eine Empfangsdiode 4. Mit Vorteil wird als Empfangsdiode eine Avalanche-Diode eingesetzt. Vorzugsweise sind Sende- und Empfangsdioden in ihrer spektralen Charakteristik aufeinander abgestimmt, wobei die Empfangsdiode ihre maximale spektrale Empfindlichkeit in dem Bereich aufweist, in welchem die Sendediode maximal emittiert. Da die Empfangsdiode 4 aber neben der von der Sendediode emittierten und vom Ziel reflektierten Strahlung viel Störstrahlung in Form von Tageslicht oder Licht von den verschiedensten Kunstlichtquellen empfängt, kann es vorteilhaft sein, der Empfangsdiode ein möglichst schmalbandiges, optisches Filter vorzusetzen, welches seine maximale Transmission in dem Spektralband aufweist, in welchem der Laser emittiert.

Der Lasertransmitter 1 umfaßt neben der Laserdiode einen Impulsgenerator, der die Laserdiode ansteuert. Der Lasertransmitter gibt, wenn er vom Prozessor 5 entsprechend angesteuert wird, eine kurze Folge von Laserimpulsen, sogenannte Bursts; ab. Ein solcher Burst kann je nach vom Prozessor gegebenen Befehl 5 - 500 Impulse umfassen. Im Regelfall wird ein solcher Burst etwa 200 Impulse aufweisen. Mittels eines vom Prozessor steuerbarem Verzögerungsgenerators 6 können die einzelnen Impulse eines Bursts in ihrer Phasenlage verändert werden, wobei die Phasenverschiebung periodisch erfolgt. In einer bevorzugten Ausführungsform der Erfindung wiederholen sich beispielsweise die Phasenbeziehungen jeweils mit einer Periode von 5 Impulsen.

Die von der Diode 4 empfangenen Signale werden in einer Verstärker- und Analog-Signalprozessorstufe 7 verstärkt und bearbeitet. Die auf diese Weise bearbeiteten Signale werden in einem Analog-/Digital-Converter 8 mit einer Sample-Frequenz von beispielsweise 60 MHz digitalisiert. Diese gesampelten Echo-Signale werden in einem Speicher 9 abgelegt. Zufolge der Phasenverschiebung der Sendeimpulse eines Bursts gegenüber der Samplefrequenz werden die gesampelten Echosignale in verschiedene Speicherzellen abgelegt. Weist die Phasenverschiebung, wie oben ausgeführt, eine Periodizität von 5 Impulsen auf, so wird der gesampelte Puls nach 5 Impulsen auf den vorhergehenden aufaddiert. Umfaßt ein Burst z.B. 200 Impulse und werden die digitalisierten Impulse mit der Periode 5 "verkämmt", so werden jeweils in einer Speicherzelle 40 Digitalwerte aufaddiert, und die Sample-Frequenz von 60 MHz erscheint um die Periodenzahl der Verkämmung vergrößert, in dem vorliegenden Beispiel auf 300 MHz, so daß das Abtasttheorem in Bezug auf den rekonstruierten Empfangsimpuls eingehalten werden kann.

Der Prozessor 5 und der Datenspeicher 9 sind durch einen Datenbus miteinander verbunden, der schematisch angedeutet und mit 10 bezeichnet ist. An diesen Datenbus 10 sind ferner ein Programmspeicher 11 für den Prozessor 5 angeschlossen, sowie ein Datenzwischenspeicher 12, in welchen nach einer ersten Auswertung durch den Prozessor 5 Rohdaten abgelegt werden, die am Ende des Meßzyklus ausgelesen werden. Aus diesen Rohdaten wird mit im Programmspeicher abgelegten Algorithmen ein Geschwindigkeits- und ein Entfernungswert für ein Ziel ermittelt und über das ebenfalls am Datenbus angeschlossene Display 13 zur Anzeige gebracht. Das Display kann außen am Gerätegehäuse angeordnet sein, es kann aber auch in das Absehen einer nicht dargestellten Visiereinrichtung integriert sein, so daß der Benutzer gleichzeitig das Ziel anvisieren und die zugehörigen Meßwerte ablesen kann.

Neben dem Geschwindigkeits- und Entfernungswert können noch weitere Daten berechnet werden, wie z. B. die zu dem Geschwindigkeitswert gehörige Signalamplitude, das Signal-Rauschverhältnis oder statistische Werte wie Streuung oder Sigma. Alle diese Werte können sowohl am Display 13 angezeigt, als auch über eine Datenschnittstelle 14 ausgegeben und z. B. in einem nachgeschaltetem Computer weiter bearbeitet und abgespeichert werden.

Die Funktionsweise der neuen Einrichtung bzw. das neue Meßverfahren wird an Hand der Figuren 2 und 3 näher erläutert. Über eine nicht dargestellte Triggereinrichtung wird dem Prozessor 5 der Befehl zum Auslösen eines Meßzyklus erteilt. Über den Verzögerungsgenerator 6 wird der Impulsgenerator des Laser-Transmitters 1 so angesteuert, daß er mit einer Impulsfolgefrequenz von z.B. 5 kHz einen ersten Burst 15 von beispielsweise 200 Impulsen aussendet. Es folgt eine Impulslücke, deren Dauer mindestens der der innerhalb derselben auszuführenden Rechenoperationen entspricht, worauf der nächste Burst ausgesendet wird. In einem Meßzyklus, der typisch eine Dauer von 0,3 bis 1 sec hat, werden 10-50 Bursts ausgesendet.

Die Figur 3 veranschaulicht die einzelnen Laser-Sendeimpulse 16, die vom Lasertransmitter 1 ausgesendet werden. Die Impulse werden von verschiedenen, im Strahlengang der Sendeoptik befindlichen Objekten reflektiert. Durch die Empfangsdiode 4 wird ein mehr oder weniger stark verrauschtes Empfangssignal der Verstärker- und Signalprozessorstufe 7 zugeleitet. In diesen Empfangssignalen erscheinen die Echos der Sendeimpulse entsprechend der Zielentfernung und damit der Impulslaufzeit zeitlich versetzt, im allgemeinen stark gedämpft und vielfach auch in der Kurvenform verzerrt. Die Kurvenformänderung kann durch die Geometrie des Zieles bedingt sein, so kann eine Abstufung oder eine entsprechende Neigung der reflektierenden Fläche des Zieles zur Achse des Sendestrahles zu einer Impulsverbreiterung führen, so daß man gegebenenfalls aus der Verzerrung auch eine Information über die Form eines Zieles erhalten kann (z.B. PKW, LKW usw.).

Die Empfangssignale 17 werden in dem Analog-Digital-Converter mit einer Sample-Frequenz von ca. 60 MHz gesampelt. Zwischen der Impulsfolgefrequenz der Sendeimpulse 16 und der Frequenz der Sample-Pulse besteht eine relative Phasenverschiebung d = L /n wobei L die Periodendauer der Samplefrequenz und n eine ganze Zahl ist. Wird n zum Beispiel mit 5 angenommen und von einem stationärem Ziel ausgegangen, so wird das Empfangssignal von 5 aufeinanderfolgenden Sendeimpulsen jeweils so zeitversetzt gesampelt, daß diese gegeneinander verkämmt sind. Dieser Vorgang wiederholt sich mit einer Periode von 5 Impulsen. Die wirksame Samplefrequenz wird damit um den Faktor n, in dem obigen Beispiel, um den Faktor 5 vergrößert. Die gesampelten und gegeneinander verkämmten Echosignale werden in die Zellen des Datenspeichers 9 abgelegt. Für einen Burst von 200 Sendeimpulsen und einer Verkämmung entsprechend einem Faktor 5 werden in einer Zelle jeweils 40 Samplewerte aufaddiert. Da die Rauschsignale statistisch auftreten, werden sie in bekannter Weise beim Aufaddieren der Digitalsignale gegenüber den systematisch auftretenden Nutzsignalen unterdrückt, so daß es zu einer deutlichen Verbesserung des Signal-Rauschverhältnisses kommt.

In den Impulslücken zwischen 2 Bursts von Sendeimpulsen wird durch den Prozessor 5 aus den im Speicher 9 abgelegten Digitalwerten mittels eines im Programmspeicher 11 abgelegten weiteren Algorithmus zum Beispiel durch Berechnung des Maximalwertes des Empfangsimpulses und Ermittlung der Laufzeit in Bezug auf den Zeitpunkt der Aussendung des Sendeimpulses 16 ein Entfernungswert ermittelt. Gleichzeitig können noch weitere Signaleigenschaften wie Signalamplitude, Signal-Rauschverhältnis und/oder Impulsbreite des Echoimpulses berechnet werden. Diese Daten werden zusammen mit dem Meßzeitpunkt des betreffenden Bursts in dem Rohdatenspeicher 12 abgelegt. Der Datenspeicher 9 kann anschließend gelöscht oder nach dem nächsten Burst mit den Daten desselben überschrieben werden.

In Fig. 4 wird im Einzelnen die Ermittlung dieser Daten aus den zeitdiskreten digitalisierten Echosignalen gezeigt. Aus dem Digitalsignal wird in einer Stufe 19 ein Rauschpegel berechnet, wobei in einer weiteren Stufe 20, dem sogenannten Zieldetektor, aus einem Rauschpegel-Schwellwert und dem Digitalsignal Filterparameter ermittelt werden. In dem adaptiven Filter 21 wird mittels der oben angeführten Filterparameter aus dem Digitalsignal ein Empfangsimpulse rekonstruiert. Aus diesem kann dann zusammen mit einem Startimpuls die Impulslaufzeit und damit die Zielentfernung berechnet werden (Stufe 22). Ebenso können aus diesen Werten Signalamplituden berechnet werden (Stufe 23). In weiteren Stufen 24 bzw. 25 können schließlich Impulsbreite und Signal-Rauschverhältnis ermittelt werden. Alle diese Werte werden, wie oben beschrieben, zusammen mit den zugehörigen Meßzeitpunkten in dem Speicher 12 für die Rohdaten abgelegt, wobei pro Burst ein Datensatz generiert wird. Es versteht sich, daß es sich bei den angeführten Stufen 19 bis 25 nicht um Hardware-handeln muß: vielmehr können die einzelnen Rechnerstufen vorzugsweise auch softwaremäßig realisiert werden.

Am Ende eines Meßzyklus werden die Datensätze sämtlicher Bursts aus dem Datenspeicher ausgelesen. Aus den zeitdiskreten Entfernungswerten wird zum Beispiel in Form einer Regressionsbildung aus den über einer Zeitachse veränderlichen Entfernungswerten die Zielgeschwindigkeit berechnet (Fig. 5). Um ein Maß für die Güte dieses Wertes anzugeben, kann zusätzlich noch die Streuung der Ergebnisse der einzelhen Bursts in Bezug auf den Gesamtwert ermittelt werden. Ebenso können Gesamtwerte für Signalamplitude, Signal/Rauschverhältnis und/oder Impulsbreite, zum Beispiel durch Mittelung, berechnet werden. Bei der Berechnung des Gesamtgeschwindigkeitswertes kann auch eine Gewichtung der Einzelwerte vorgenommen werden, z.B. in dem Sinn, daß Werte mit geringer Signalamplitude bzw. geringem Signal-Rauschverhältnis schwächer in der Berechnung berücksichtigt werden, als Werte, die einen hohen Signalpegel bzw. ein hohes Signal-Rauschverhältnis aufweisen.

Das erfindungsgemäße Meßverfahren kann in verschiedener Weise modifiziert werden. So können etwa die Meßparameter adaptiv variiert werden: zu diesem Zweck werden die Ergebnisse des bzw. der ersten Bursts benutzt, um die Parameter für die weiteren Messungen zu verändern. Wird z. B. aus dem ersten Burst oder aus den ersten Impulsen dieses Bursts eine kleine Signalamplitude oder ein geringes Signal-Rauschverhältnis ermittelt, so kann automatisch durch den Prozessor 5 die Zahl der Impulse pro Burst vergrößert und/oder die Zahl der Bursts pro Meßzyklus erhöht werden. Bei Anwendung dieser adaptiven Verfahren empfiehlt es sich, die Impulszahl des oder der ersten Bursts ausreichend hoch anzusetzen, so daß in jedem Fall mit ausreichender Genauigkeit ein Datensatz ermittelt werden kann. Bei diesen adaptiven Verfahren kann, eine gute Signalqualität vorausgesetzt, eine kurze Dauer des Meßzyklus erzielt werden, nur unter ungünstigen Bedingungen wird die maximale Dauer des Zyklus erreicht.

Aus den Daten der ersten Bursts können auch sogen. Range-Gates oder Entfernungs-(bzw.Zeit-) Fenster extrapoliert werden. Die Ergebnisse der folgenden Bursts werden dann nur innerhalb dieser Range-Gates akzeptiert, wodurch sich eine weitere Verbesserung der Empfindlichkeit und in weiterer Folge auch der Meßgenauigkeit ergibt.

Schließlich kann die Berechnung der Gesamtwerte in zwei Rechengängen erfolgen. In einem ersten Rechengang wird nach einem vorgegebenen Algorithmus ein Geschwindigkeitswert ermittelt. Es werden dann alle jene Datensätze ausgeschieden, die in Bezug auf den ersten Gesamtwert stärker streuen, als einer vorgegebenen Grenze entspricht. Diese Werte können beispielsweise durch Verwackeln des Meßgerätes entstanden sein oder etwa auch dadurch, daß ein Vogel während des Meßzyklus den Strahlengang passiert hat oder ein Zweig in diesen eingetaucht ist. In einem zweiten Rechengang werden diese falschen Werte unterdrückt, so daß die Genauigkeit des Meßergebnisses insgesamt verbessert werden kann.

Schließlich können auch fixe Zeit- bzw. Entfernungsfenster definiert werden, in welchen eine Messung unterbunden wird. Bei Verwendung von Laser-Geschwindigkeitsmeßgeräten zur Überwachung des Straßenverkehrs, wird vielfach von den Behörden verlangt, daß für eine Geschwindigkeitsmessung nur Ziele in einem bestimmten Entfernungsbereich herangezogen werden. Bei dem erfindungsgemäßen Verfahren können entsprechende Range-Gates definiert werden, wobei außerhalb derselben die Echosignale nicht digitalisiert oder aber nicht abgespeichert werden.

In einer weiteren Ausgestaltung der Erfindung werden unmittelbar nach jedem Burst aus den zeitdiskreten, digitalisierten und aufaddierten Echosignalen Empfangsimpulse rekonstruiert, welche Impulse dann in dem Speicher 12 abgelegt werden. (Vgl. hierzu Fig. 6). Der Vorteil dieser Methode besteht darin, daß die anschließende Auswertung zu einer höheren Genauigkeit führen kann.

Schließlich können noch die gesamten zeitdiskreten, digitalisierten und aufaddierten Echosignale in dem Speicher 12 abgelegt werden. Es ist dann wohl eine höhere Speicherkapazität erforderlich, auf der anderen Seite bietet diese Methode zahlreiche zusätzliche Optionen. So können nach einem ersten Rechengang Range-Gates definiert werden, um Störquellen auszuschließen, es können auch für sämtliche, im Strahlengang des Laser-Transmitters 1 befindliche Objekte Datensätze inklusive Geschwindigkeitswerte ermittelt werden. Ferner kann mit diesem Verfahren dasjenige Ziel im Strahlengang ermittelt werden, welches die größte Geschwindigkeit aufweist, wobei hierzu selbstverständlich der komplette Datensatz für dieses Ziel ausgegeben werden kann.

In Fig. 7 sind schließlich zwei verschiedene rekonstruierte Echoimpulse dargestellt: ein erster Impuls 26 stammt von einem in Bezug auf das Meßsystem stationärem Ziel. Die Impulsform entspricht weitgehend der Form des Sendeimpulses. Der zweite Impuls 27 ist der rekonstruierte Echoimpuls eines relativ zum Meßgerät schnell bewegten Objektes. Der Impuls ist deutlich verbreitert, wodurch die Ermittlung des Maximalwertes erschwert wird.

Dieses Problem kann dadurch gelöst werden, daß aus den Daten des oder der ersten Bursts ein Geschwindigkeitswert ermittelt wird. Aus dieser Geschwindigkeit, der Form der Sendeimpulse und der Dauer eines Bursts kann ein Musterimpuls berechnet werden. Dieser Musterimpuls wird rechnerisch in das Empfangssignal eingepaßt und damit der dem Maximum des Sendeimpuls entsprechende Wert definiert. Es ist also auch unter diesen Umständen möglich, eine exakte Laufzeitbestimmung durchzuführen.

Bei bestimmten Zielen, und zwar bei Zielen, die eine deutliche Stufe aufweisen, wie z.B. LKW-Aufbauten, kann es vorkommen, daß die Meßkeule beide Flächen der Stufe erfaßt. Ist der Abstand dieser beiden Flächen innerhalb der räumlichen Ausdehnung der Sendepulse so erhält man einen verzerrten und stark verbreiterten Empfangsimpuls, wobei die impulsverbreiterung nicht mit der Geschwindigkeit korreliert. Beim Schwenken des Meßgerätes über eine solche Kante oder Stufe eines Zieles, könnte durch den dann ermittelten Sprung in den gemessenen Entfernungswerten ein falscher Geschwindigkeitswert ermittelt werde. Eine Möglichkeit diese in Fachkreisen als "Stufeneffekt" bezeichnete Erscheinung auszuschalten besteht darin, die Empfangsimpulse durch den Prozessor 5 auf solche, abnorme und nicht auf die Geschwindigkeit des Zieles zurückzuführende Impulsverbreiterungen zu überprüft. Wird eine solche Impulsverbreiterung festgestellt, wird das Ergebnis eines Bursts bzw. des gesamten Meßzyklus verworfen und es wird gegebenenfalls kein Meßergebnis angezeigt.

Die Figur 8 zeigt in Form eines weiteren Blockdiagrammes schematisch den Aufbau einer Variante eines Laser- Geschwindigkeitsmeßsystems gemäß der Erfindung, wobei die Elemente, die mit den in Fig. 1 gezeigten übereinstimmen gleiche Bezugszeichen aufweisen.

Der Geschwindigkeitsmesser ist als Handgerät ausgebildet und enthält eine Visiereinrichtung, um das Gerät auf ein Ziel ausrichten zu können. In der Handhabung ist das Gerät einer Film- oder Videokamera ähnlich. Wie diese verfügt das Gerät über eine eingebaute, vorzugsweise wiederaufladbare Batterie 48 und einen elektronischen Hauptschalter 49, der durch einen Tastschalter 50 angesteuert wird. Das Gerät wird durch Antippen des Tasters 50 eingeschaltet und durch neuerliches Antippen wieder von der Batterie 48 getrennt. Der Hauptschalter 49 kann aber auch in bekannter Weise automatisch vom Mikrocontroller 5 abgeschaltet werden, wenn während einer definierten Zeitspanne keine Messung mit dem Gerät vorgenommen wird, Programmeingaben erfolgen oder über die Schnittstelle 14 kein Datentransfer stattfindet. Der Abschaltbefehl wird dem Hauptschalter 49 über den Datenbus 10 übermittelt. Die Batterie 48 speist bei eingeschaltetem Hauptschalter 49 eine Hochspannungseinheit, welche die Laserdiode 1a und die Empfangsdiode 4 mit Spannung versorgt. Die Batterie speist ferner eine Niederspannungseinheit 52, die alle übrigen Komponenten des Gerätes mit Spannung versorgt. Neben den oben erwähnten Komponenten umfaßt das Gerät noch einen weiteren, langsamen A/D-Converter 53, über welchen mit geringerer Geschwindigkeit, in analoger Form anfallende Parameter, wie Sprachaufzeichnungen und Kompaßpeilrichtung etc. in den Prozessor 33 eingelesen werden. Mit 53a - 53c sind beispielhaft die entsprechenden Eingänge bezeichnet. Digital anfallende Daten wie Datum und Uhrzeit der Messung sowie GPS-Koordinaten werden direkt in den Prozessor eingelesen.

In Fig. 9 ist der mechanische Aufbau eines solchen Meßsystems, das zur Messung aus freier Hand bestimmt ist, gezeigt. Das Gerät ist ähnlich kompakt wie eine Video- oder Filmkamera aufgebaut und enthält alle für den Betrieb erforderlichen Komponenten, insbesondere auch die Stromversorgung, so daß es völlig autark betrieben werden kann. An der Vorderseite des Gehäuses 90 sind die Sende- und Empfangsoptiken 2 bzw. 3 angebracht. An der Rückseite befindet sich das Okular 91 einer Visiereinrichtung, welche in die Sendeoptik eingespiegelt ist und mit deren Hilfe der Benutzer den Meßstrahl auf ein Ziel ausrichten kann. Unten, an der Rückseite des Gerätes 90 ist ein Mikrophon 92 eingebaut, über welches der Benutzer einen kurzen, für die Messung relevanten Text aufsprechen kann. Diese Audiosignale werden in einem Verstärker 93 verstärkt, nachfolgend digitalisiert und zusammen mit den gemessenen Entfernungsund Geschwindigkeitswerten in einem Datensatz abgespeichert. Das Gerät enthält ferner eine Funkuhr 94, einen Digitalkompaß 95, sowie ein Satellitennavigations-System GPS (Global Positioning System) 96, welche Komponenten schematisch in der Zeichnung angedeutet sind. Die von diesen Systemen während der Messung gelieferten Daten werden nach der Messung zusammen mit den eigentlichen Meßwerten in digitaler Form in einem Datensatz in dem internen Digitalspeicher des Gerätes abgelegt. Das Gerät ist ferner mit einem ersten, (nicht dargestelltem) Display ausgerüstet, welches in den Strahlengang der Visiereinrichtung eingespielt ist, so daß der Benutzer gleichzeitig mit dem Bild des Zieles auch die Meßergebnisse erkennen kann. Ein zweites Display 97 ist an einer Gehäuseseite angeordnet. Dieses z.B. als Flüssigkristall-Schirm ausgebildete Display zeigt alle für die Messung relevanten Daten bzw. Parameter an. In dem vorliegenden Beispiel werden neben den eigentlichen Meßwerten, wie Entfernung und Geschwindigkeit die Uhrzeit, die Kompaßpeilung sowie die GPS-Koordinaten zum Zeitpunkt des Meßvorganges angezeigt. Über einen eingebauten Kleinlautsprecher 98 kann auch der vom Benutzer während der Messung aufgesprochene Text abgehört werden.

In dem Beispiel gemäß Fig. 10 weist die Meßeinrichtung eine Video-Aufzeichnungs-Einrichtung auf, deren Photo-Dioden-Array im Strahlengang der Sende-Optik angeordnet ist. Das Video-System weist ein wesentlich kleineres Bildfeld auf wie die Visiereinrichtung, so daß das Ziel oder wesentliche Teile desselben mit einer relativ geringen Anzahl von Bildelementen (Pixel) ausreichend deutlich dargestellt werden kann. Das Videobild zum Zeitpunkt der Messung wird digitalisiert und in dem Datensatz zusammen mit den Meßwerten aufgezeichnet. Die Meßeinrichtung weist an der Gehäuseaußenseite ein relativ großflächiges LCD-Farbdisplay 99 auf, das in das Gehäuse 100 einklappbar ist. Auf dem Display ist neben dem Ziel das Absehen 101 erkennbar, das den Meßstrahl veranschaulicht, sowie die eigentlichen Meßwerte Geschwindigkeit und Entfernung (103) und Uhrzeit und Datum zum Zeitpunkt der Messung (104).

Die Figur 11 veranschaulicht ein weiteres Meßsystem, welches aus einem mobilen Meßkopf 105 und einem stationären Datenaufzeichnungsgerät 106 besteht. Der Meßkopf umfaßt neben dem Laser-Radar-System ein Mikrophon 92 zur digitalen Sprachaufzeichnung, eine Funkuhr, sowie einen Digital-Kompaß.

In der eigentlichen Meßphase (Fig. 11a) wird ein Ziel 107 anvisiert und durch Betätigen des Triggers 108 eine Messung ausgelöst. Anschließend an die Messung wird ein erstes Segment eines Datensatzes aufgezeichnet, das schematisch angedeutet und mit 109 bezeichnet ist. Der Datensatz enthält in einer ersten Sequenz den Entfernungswert (E) und den Wert für die Geschwindigkeit des Zieles (V), in einer weiteren Sequenz ist die Sprachaufzeichnung in digitaler Form (SP) abgelegt, die beispielsweise Angaben wie Fahrzeugkennzeichen, Fahrzeugfabrikat und Type sowie Fahrzeugfarbe umfassen kann. In dem Datensatz wird schließlich die Kompaß-Peilrichtung (R) als Digitalwert festgehalten. Der Datensatz endet mit einer Kontrollziffer ( C).

Unmittelbar anschließend an die Messung wird in einer zweiten Phase (Fig. 11b) das Gerät 105 auf Datenübertragung umgeschaltet und das Datenaufzeichnungsgerät 106 anvisiert, das typischer Weise in einem Einsatzfahrzeug der Beamten installiert ist. Das Datenaufzeichnungsgerät 106 weist einen Retroreflektor 110 auf, sowie eine Sende-und eine Empfangsdiode, welchen jeweils eine Optik 111 bzw. 112 vorgeschaltet ist.

Vor der eigentlichen Datenübertragung wird eine Entfernungsmessung durchgeführt, wobei das Gerät 105 in einen Modus geschaltet wird, in welchem nur Ziele mit hoher Signalamplitude (z. B. Reflektoren ) akzeptiert werden. Der entsprechende Entfernungswert ( E) wird zusammen mit Übertragungszeit ( T), Kompaß-Peilrichtung ( R) sowie einer Kontrollziffer ( C) in einem zweiten Segment 113 des Datensatzes abgespeichert. Unmittelbar anschließend werden automatisch die im Gerät 105 gespeicherten Daten übertragen. Die entsprechenden Digitalsignale werden der Sendediode 1a zugeführt, die eine Folge von Laserimpulsen abgibt. Diese werden durch die Optik 2 gebündelt ausgesendet und von der Empfangsdiode des Gerätes 106 aufgenommen. Um Fehler in der Datenübertragung ausschließen zu können, werden von der Sendediode des Gerätes 106 die Kontrollziffern des Datensatzes an das Gerät 105 rückübertragen. Bei fehlerhafter Übertragung wird der Vorgang wiederholt. Sind die Daten einwandfrei übertragen worden, wird der aus zwei Segmenten bestehende Datensatz im Gerät 106 abgespeichert und durch ein drittes Segment ergänzt, welches die geographischen Koordinaten des Gerätes 106 umfaßt, welche durch eine GPS-Satellitennavigationsanlage 114 ermittelt werden. Aus den verschiedenen Entfernungswerten, den Kompaß-Peilrichtungen und den GPS-Koordinaten kann der Standort des Zieles zum Zeitpunkt der Messung mit einer Genauigkeit von etwa 50 m angegeben werden. Wird die Reichweite der Datenübertragung auf eine Distanz von z. B. kleiner als 10 m reduziert, so kann der Standort des Zieles bzw. des Beobachters auch ohne eine besondere Messung der relativen Position von Geschwindigkeitsmeßgerät und Datenerfassungsstation mit ausreichender Genauigkeit angegeben werden.

In Fig. 12 ist eine Variante zu dem obigen System gezeigt: Das Laser-Radargerät 115 ist mit einem Kabel 117, das eine Länge von lediglich einigen Metern aufweist, mit dem Datenaufzeichnungsgerät verbunden. Dieses enthält ebenfalls eine GPS- Navigationseinrichtung und ist in dem Einsatzfahrzeug 116 des Beamten 118 installiert. Unmittelbar nach der Messung werden die Daten über das Kabel 117 zum Aufzeichnungsgerät übertragen und dort durch die entsprechenden GPS-Koordinaten ergänzt. Durch die begrenzte Kabellänge kann auch in diesem Fall der Standort des Zieles mit ausreichender Genauigkeit angegeben werden.

Die Erfindung ist nicht auf die oben angeführten Beispiele beschränkt. So kann es zweckmäßig sein zusätzlich oder anstelle der oben angeführten Parameter andere, für die Messung relevante Parameter bzw. Daten aufzuzeichnen. In den Beispielen gemäß den Figuren 11 und 12 ist im Datenaufzeichnungsgerät ein genügend großer Datenspeicher vorgesehen, so daß die Daten einer Vielzahl von Messungen abgespeichert werden können. Bei Handgeräten wird vielfach aus Kostengründen auf eine Abspeicherung einer großen Anzahl von Messungen verzichtet. Es ist aber selbstverständlich im Rahmen der Erfindung auch bei diesen Geräten möglich, Datenspeicher mit entsprechend großer Kapazität vorzusehen und eine Vielzahl von Datensätzen abzuspeichern.

Die Figuren 13 und 14 veranschaulichen Details der in Fig. 8 gezeigten Schaltung: Die Verstärker- und Signalprozessorstufe 7 und der Analog-/Digital-Converter 8 sind, wie in Verbindung mit Fig. 14 näher erläutert werden wird, in 2 Kanäle aufgespalten. Über einen elektronischen Umschalter 28 werden die beiden Kanäle wieder zusammengefaßt und die Signale derselben der weiteren Signalverarbeitung zugeführt. In diesem Beispiel hat das Ausgangssignal des Umschalters 28 eine Sample-Rate von 60 Mega Samples/ sec (MS/sec) bei einer Wortbreite von 6 bit. In einem Multiplexer 29 werden die 6-bit-Worte zu Worten von 24 bit zusammengefaßt, wodurch die Sample-Rate auf 15 MS/sec reduziert wird.

Der Mikro-Prozessor 33 verfügt neben dem eigentlichen Controller 5 über ein erstes RAM 11, das eine Wortbreite von 24 bit aufweist und typischerweise als Programmspeicher eingesetzt wird und über ein vergleichsweise größeres RAM, mit einer Wortbreite von 16 bit, welches als Arbeitsspeicher dient. In der erfindungsgemäßen Anordnung wird ein Teil 11a des 24-bit Programmspeichers zur Zwischenspeicherung der Echosignal-Samples verwendet, der übrige Teil 11b dient, wie bekannt, als Programmspeicher. In den Speicher 11 a werden nun unmittelbar nach Aussendung eines Laser-Impulses beim Empfang der Echosignale vom Multiplexer die 24-bit-Samples mit einer Rate von 15 MS/sec "on-line" eingelesen und abgespeichert. Der Datenaustausch zwischen den verschiedenen Komponenten des Mikro-Prozessors 33 erfolgt über einen internen Datenbus 31.

In der anschließenden Impulslücke wird das RAM 11a wieder ausgelesen. Die 24-bit-Worte werden in einer De-Multiplex-Stufe 30 des Mikroprozessors in Worte mit einer Breite von 16 bit umgewandelt und in dem Teil 9 des zweiten RAMs abgelegt, dessen Wortbreite ebenfalls 16 bit entspricht. Die Samples weiterer digitalisierter Echo-Impulse werden in diesem Speicherbereich 9 phasengleich oder mit einem definierten Phasenversatz in Bezug auf die Sendeimpulse aufaddiert.

Nach dem letzten Echoimpuls eines Bursts werden die aufaddierten Samples aus dem Speicherbereich 9 ausgelesen. Der Controller interpoliert aus diesen Werten einen Antwortimpuls, der in einem zweiten Teil 12 des 16-bit-RAM, der als Rohdatenspeicher dient abgelegt wird. Während eines Meßzyklus werden eine größere Zahl von Bursts "abgefeuert", Als Resultat jedes Bursts wird ein Echoimpuls in dem Speicher 12 abgelegt. Aus allen diesen Werten wird am Ende des Meßzyklus das Meßergebnis z. B. ein Entfernungs- und/ oder ein Geschwindigkeitswert berechnet und auf dem Display 13 angezeigt und gegebenenfalls über die Datenschnittstelle 14 ausgegeben. Der Datenaustausch mit diesen Komponenten erfolgt über den externen Datenbus 32.

Durch die Erfindung gelingt es trotz Verwendung von handelsüblichen Bauteilen, eine relativ hohe Sample-Rate zu verwenden, die eine notwendige Voraussetzung zur Erzielung einer hohen Auflösung der Meßwerte darstellt. Um trotz der geringen bit-Wortbreite des Digitalsignales eine ausreichende Dynamik zu erhalten, werden gemäß einer Weiterbildung der Erfindung zusätzliche Maßnahmen ergriffen, welche an Hand der Fig. 14 und Teile der Fig. 13 näher erläutert werden.

Der Ausgang der Avalanche-Empfangs-Diode 4 wird zwei Kanälen zugeführt. Der erste Kanal weist einen Verstärker 34 sowie einen logarithmischen Signalkompressor 7a auf. Das Ausgangssignal dieses Signalkompressors wird in einem Analog-/Digital-Converter 8a digitalisiert. Der zweite Kanal ist analog aufgebaut, verfügt allerdings nicht über einen Verstärker entsprechend dem Verstärker 34. Die Ausgänge der beiden Analog/Digital-Converter werden einem elektronischen Umschalter 28 zugeführt, welcher über den Datenbus 32 vom Mikroprozessor 33 gesteuert wird. Am Beginn eines Meßzyklus bzw. Bursts schaltet der Umschalter 28 zunächst den ersten Kanal, den sogenannten "low level Kanal" auf den Multiplexer 29 durch. Ermittelt der Controller 5 einen Signalpegel, der einen definierten Schwellwert überschreitet, so gibt er an den Umschalter 28 den Befehl, auf den zweiten Kanal ("High level Kanal") umzuschalten, (Siehe hierzu auch Fig. 15). Durch diese Maßnahme ist es möglich, bei einer gegebenen Dynamik die Signal-Wortbreite entsprechend zu reduzieren. Durch Erhöhung der Kanalzahl kann die bit-Wortbreite im Prinzip weiter reduziert werden. Gemäß einem weiteren Merkmal der Erfindung verfügen alle für die Geschwindigkeitsmessung wesentlichen Komponenten über einen einzigen, gemeinsamen Taktgenerator, der sowohl die Sample-Rate für den schnellen A/ D-Converter 8 vorgibt, welcher die Echo-Signale digitalisiert, als auch als Clock-Generator für den Mikro-Controller 5 dient. Im Rahmen der Erfindung können selbstverständlich auch mehrere Taktgeneratoren vorgesehen sein, von welchen dann allerdings einer als Master fungiert, mit welchen die anderen Clock-Generatoren phasenstarr gekoppelt sind. Es kann in einem solchen Fall zweckmäßig sein, durch den Prozessor die Phasenbeziehung der verschiedenen Taktgeber periodisch überprüfen zu lassen.

Durch die Verwendung eines einzigen Taktgebers gehen bei der Geschwindigkeitsmessung unvermeidliche Frequenzabweichungen des Taktgebers, wie an Hand der beiden Diagramme der Fig. 16 näher erläutert werden wird, nicht in das Meßergebnis ein.

Im ersten Diagramm der Fig. 16 sind die Impulslaufzeiten 56 der Laser-Impulse der verschiedenen Puls-Bursts über der Meßzeit aufgetragen. Diese Daten sind im Speicher 12 des Prozessors abgelegt, und werden am Ende eines Meßzyklus ausgelesen und ausgewertet. Diese TOF-Werte entsprechen unmittelbar Entfernungswerten 57 im zweiten Diagramm der Fig. 16. Der Geschwindigkeitswert wird als Quotient der Entfernungs- und der Meßzeitdifferenz ermittelt. Da aber beide Werte auf Zeiten zurückzuführen sind und diese durch einen gemeinsamen Taktgeber bestimmt werden, können allfällige Schwankungen in der Frequenz des Taktgebers den ermittelten Geschwindigkeitswert nicht negativ beeinflussen.

Wie oben im Zusammenhang mit der Figur 8 erwähnt worden ist wird eine Messung nach Einschalten des Hauptschalters 49 durch Betätigung des Trigger-Tastschalters 54 ausgelöst, dessen Signal dem Mikro-Controller 5 zugeleitet wird. Erst nach Betätigung des Triggers 54 erhalten die wesentlichen, für die Messung erforderlichen Komponenten über den Mikro-Controller 5 und den Datenbus 10 den Einschaltbefehl. Die Hochspannungsversorgung 51 speist die Sende- und die Empfangsdiode 1a bzw. 4 mit Hochspannung an, die anderen Komponenten werden mit der Niederspannungsquelle 52 verbunden. Die Auslösung der Laser-Impulse erfolgt nicht unmittelbar, sondern mit einer geringen zeitlichen Verzögerung, um zu gewährleisten, daß die Einschwingvorgänge zur Gänze abgeklungen sind.

Die Funktion der selektiven Zu- und Abschaltung der einzelnen Gerätekomponenten wird im folgenden an Hand des Flußdiagrammes der Fig. 17 näher erläutert.

Wird das Gerät mit dem Taster 50 und dem elektronischen Schalter 49 eingeschaltet, so wird der Prozessor 33 an Spannung gelegt und schaltet über den Datenbus 10 die Hochspannungs- und die Niederspannungsversorgung 51 bzw. 52 ein. Es folgt ein interner Selbsttest, nach dessen erfolgreicher Beendigung der Prozessor die beiden Spannungsversorgungen wieder abschaltet und das Gerät in einen "stand-by"-Modus bringt. In der weiteren Folge durchläuft der-Prozessor eine Schleife, in welcher der Trigger-Taster 54 ständig abgefragt wird. Bei Betätigung desselben wird das Display zurückgesetzt und sowohl die Hochspannungs- als auch die Niederspannungsversorgung 51 bzw. 52 wieder eingeschaltet. Nach einer kurzen Zeitverzögerung, die so bemessen ist, daß Einschwingvorgänge in den verschiedenen Schaltkreisen mit Sicherheit abgeklungen sind, wird der eigentliche Meßvorgang ausgelöst. Nach Aussendung einer Folge von Laser-Impulsen und Auswertung der Echo-Signale wird ein Batterietest durchgeführt. Anschließend werden beide Spannungsversorgungen abgeschaltet, lediglich der Prozessor 33, das Display 13 sowie das Interface 14 werden weiter mit Spannung versorgt. Das oder die Meßresultate werden am Display angezeigt. Das Gerät befindet sich wieder in dem "stand-by"-Modus und ist für einen weiteren Meßzyklus bereit. Wird aber innerhalb einer vorgegebenen Zeit von zB. 10 Minuten keine weitere Messung durchgeführt und erfolgt auch kein Datentransfer bzw. werden sonst keine Eingaben durchgeführt, so schaltet der Prozessor 33 schließlich den Hauptschalter 49 ab, so daß das Gerät völlig stromlos wird.

Durch die selektive Abschalteinrichtung werden immer nur die Gerätekomponenten mit Energie versorgt, die zum Betrieb des Gerätes erforderlich sind. Bei Nichtbedarf werden diese Verbraucher sofort abgeschaltet und nur der Prozessor und das Display, welche beide einen sehr geringen Stromverbrauch aufweisen, werden weiter versorgt, bis sie bei längerem Nichtgebrauch ebenfalls abgeschaltet werden.

Durch diese Einrichtung ist es möglich, mit relativ geringen Batteriekapazitäten die gewünschten langen Betriebszeiten mit einer Ladung zu erreichen. Die geringe erforderliche Batteriekapazität ermöglicht die Verwendung kleiner und leichter Batterien. Da die Batterie für die Gerätedimensionen und für das Gerätegewicht ein bestimmender Faktor ist, gelingt es durch die Erfindung, besonders kleine und leichtgewichtige Laser-Meßgeräte zu bauen.

Die Erfindung ist natürlich nicht auf das oben beschriebene Digital-Gerät beschränkt, sondern kann mit den gleichen Vorteilen auch bei Geräten mit analoger Datenverarbeitung eingesetzt werden.

**Patentansprüche**

1. Opto-elektronisches Meßverfahren, bei welcher eine Sendeeinrichtung während eines Meßzyklus eine Folge optischer Impulse aussendet, wobei eine Empfangseinrichtung, die von im Strahlengang der Sendeeinrichtung befindlichen Zielobjekten reflektierten Signale empfängt, welche Empfangssignale in einer Signalverarbeitungsstufe verstärkt, eventuell umgeformt, und digitalisiert werden, wobei die einzelnen Samples eines digitalisierten Empfangssignales in Zellen eines elektronischen Speichers abgelegt und die abgetasteten Signalwerte (Samples) mehrerer Empfangssignale in diesen Speicherzellen aufaddiert werden, wobei mittels definierter Algorithmen aus den aufaddierten Abtastwerten ein einem Zielobjekt zugeordneter Empfangsimpuls ermittelt und aus dessen Laufzeit in Bezug auf einen zugehörigen Startimpuls ein Entfernungswert berechnet wird, und wobei am Ende eines Meßzyklus aus der Vielzahl der Entfernungswerte und den zugehörigen Meßzeitpunkten ein Geschwindigkeitswert für ein Zielobjekt berechnet wird, **dadurch gekennzeichnet, daß** die ausgesandten Impulsfolgen in eine Vielzahl von Impulspaketen oder sogenannten "Bursts" unterteilt sind, welche Bursts durch Impulslücken getrennt sind, und das Empfangssignal zu Zeitpunkten abgetastet wird, die gegenüber den einzelnen Impulsen eines Bursts periodisch um ein Vielfaches von

$$d=L/n$$

phasenverschoben ist, wobei

n eine ganze Zahl, vorzugsweise 5, ist,
d die Phasenverschiebung und
L die Periodendauer der Samplefrequenz bedeutet,

so daß Samples der digitalisierten Empfangssignale gegeneinander mit einer Periode von n verkämmt sind und die wirksame Samplefrequenz um den Faktor n vergrößert ist, wobei in absoluten Werten vorzugsweise die Sendeimpulse in ihrer Phasenlage verschoben werden.

2. Opto-elektronisches Meßverfahren, nach Anspruch 1, **dadurch gekennzeichnet, daß** wenigstens eine der folgenden Maßnahmen durchgeführt wird:

a) ein Burst besteht aus 5-500, vorzugsweise 200, Impulsen, wobei ein Meßzyklus von z.B. 0,3 -1 sec, vorzugsweise 10-50 Bursts umfaßt;
b) die Impulswiederholrate beträgt in an sich bekannter Weise 0,5 - 9 kHz, vorzugsweise 5 kHz.

3. Opto-elektronisches Meßverfahren, nach Anspruch 1 oder 2, **dadurch gekennzeichnet, daß** während der Impulslücken zwischen zwei Bursts in dem elektronischen Rechner mittels definierter Algorithmen jeweils aus den zeitdiskreten, digitalisierten und aufaddierten Empfangssignalen der Impulse des vorhergehenden Bursts ein einem Zielobjekt zugeordneter Empfangsimpuls ermittelt und aus der Laufzeit dieses rekonstruierten Empfangsimpulses in Bezug auf den zugehörigen Startimpuls ein Entfernungswert berechnet und in einem Speicher abgelegt wird, wobei am Ende des Meßzyklus diese Entfernungswerte aus dem Speicher ausgelesen werden und aus der Vielzahl dieser Werte und den zugehörigen Meßzeitpunkten ein Geschwindigkeitswert für ein Zielobjekt berechnet, ausgegeben und/oder angezeigt wird.

4. Opto-elektronisches Meßverfahren, nach Anspruch 1 oder 2, **dadurch gekennzeichnet, daß** während der Impulslücken zwischen zwei Bursts in dem elektronischen Rechner mittels definierter Algorithmen jeweils aus den zeitdiskreten, digitalisierten und aufaddierten Empfangssignalen der Impulse des vorhergehenden Bursts ein einem Zielobjekt zugeordneter Empfangsimpuls ermittelt und in einem Speicher abgelegt wird, wobei am Ende des Meßzyklus diese Impulse aus dem Speicher ausgelesen werden und aus der Vielzahl dieser rekonstruierten Impulse und den zugehörigen Meßzeitpunkten ein Geschwindigkeitswert für ein Zielobjekt berechnet, ausgegeben und/oder angezeigt wird.

5. Opto-elektronisches Meßverfahren, nach Anspruch 1 oder 2, **dadurch gekennzeichnet, daß** jeweils nach Aussenden eines Bursts die vollständigen, zeitdiskreten, digitalisierten und aufaddierten Empfangssignale in einem Speicher abgelegt werden, wobei am Ende des Meßzyklus diese Empfangssignale aus dem Speicher ausgelesen werden und aus der Vielzahl dieser Empfangssignale jeweils Empfangsimpulse rekonstruiert werden, wobei aus diesen und den zugehörigen Meßzeitpunkten in einem ersten Rechengang der Geschwindigkeitswert für das Zielobjekt berechnet wird, das in den Empfangssignalen die maximale Amplitude des Impulsmaximums aufweist, und daß vorzugsweise wenigstens eine der folgenden Maßnahmen durchgeführt wird:

a) es ist ein Fenster von Speicheradressen, welche Entfernungswerten entsprechen, definierbar, innerhalb welchem Samples der Empfangssignale zur Auswertung herangezogen werden und ein solches Fenster gegebenenfalls auch nach der ersten Auswertung definiert werden kann, wobei in einem weiteren Rechengang ein korrigierter Geschwindigkeitswert ermittelt wird;

b) in weiteren Rechengängen werden Geschwindigkeitswerte weiterer im Strahlengang der Sendeeinrichtung befindlicher Objekte berechnet, wobei gegebenenfalls die Geschwindigkeit des schnellsten im Strahlengang der Sendeeinrichtung befindlichen Objektes ermittelt wird und zwar unabhängig von der zugehörigen Signalamplitude.

6. Opto-elektronisches Meßverfahren, nach einem der vorhergehenden Ansprüche, **dadurch gekennzeichnet, daß** wenigstens eine der folgenden Maßnahmen durchgeführt wird:

a) ein Range- bzw. Zeitfenster ist in Bezug auf den Startimpuls definierbar, innerhalb welchem das Empfangssignal gesampelt wird bzw. die Samples gespeichert werden, so daß die Messung in bestimmten Entfernungsbereichen unterdrückt werden kann oder daß aus den ersten Bursts ein den Geschwindigkeits- und/oder Entfernungswerten angepaßtes Range- bzw. Zeitfenster extrapoliert wird, innerhalb welchem das Empfangssignal gesampelt wird bzw. die Samples gespeichert werden, so daß die Messungen in anderen Entfernungsbereichen unterdrückt werden können;

b) neben den Entfernungswerten werden weitere Werte wie Signalamplitude, Signal-/Rauschverhältnis und/oder statistische Werte, wie Streuung bzw. Sigma-Werte berechnet, wobei bevorzugt noch wenigstens eine der folgenden Maßnahmen vorgesehen wird:

b') aus dem Empfangssignal des bzw. der ersten Bursts wird die Signalamplitude bzw. das Signal-/Rauschverhältnis ermittelt und die Impulszahl pro Burst bei den folgenden Bursts als Funktion dieser Werte in dem Sinne verändert, daß bei großen Signalamplituden bzw. Signal/Rauschverhältnissen die Zahl der Impulse pro Burst und damit die Zeitdauer eines Meßzyklus reduziert wird, bei kleinen Signalamplituden bzw. Signal-/Rauschverhältnissen die Zahl der Impulse pro Burst erhöht wird, wobei gegebenenfalls die Empfangssignale der Bursts, welche noch die geringere Impulszahl/Burst aufgewiesen haben, für die Ermittlung des Geschwindigkeitswertes ausgeschieden werden, wobei bevorzugt bei adaptiver Wahl der Anzahl der Sendeimpulse pro Burst weisen der bzw. die ersten Bursts eines Meßzyklus eine überdurchschnittlich große Impulszahl auf, so daß auch unter ungünstigen Bedingungen eine Zielentfernung bestimmbar ist, um daraus abgeleitet für die folgenden Meßvorgänge die Parameter sowie gegebenenfalls ein Range-Gate bzw. Fenster in geeigneter Weise bestimmen zu können;
b") aus dem Empfangssignal der ersten Bursts wird die Signaleigenschaft, wie Entfernungswert, Signalamplitude bzw. das Signal-/Rauschverhältnis ermittelt und dann die Anzahl der Bursts pro Meßzyklus als Funktion dieser Signaleigenschaft in dem Sinne verändert, daß bei großen Entfernungswerten, großen Signalamplituden bzw. Signal/ Rauschverhältnissen und/oder kleinen Meßwertstreuungen die Zahl der Bursts pro Meßzyklus vermindert wird und damit die Zeitdauer eines solchen reduziert wird, bei kleinen Entfernungswerten und/oder kleinen Signalamplituden bzw. Signal-/Rauschverhältnissen und/oder großen Meßwertstreuungen die Zahl der Bursts pro Meßzyklus erhöht wird;

c) die Ermittlung des Geschwindigkeitswertes erfolgt in mindestens zwei Rechengängen, wobei im ersten Rechengang ein erster Mittelwert berechnet wird und Ergebnisse einzelner Bursts, die gegenüber diesem ersten Mittelwert um einen Wert abweichen, der größer ist als ein vorgegebener, gegebenenfalls einstellbarer Schwellwert ausgeschieden und in der anschließenden Berechnung eines zweiten Mittelwertes nicht berücksichtigt werden;

d) aus den digitalisierten und aufaddierten Empfangssignalen zumindest der ersten beiden Bursts werden Empfangsimpulse rekonstruiert und in Verbindung mit den zugehörigen Startimpulsen und Meßzeitpunkten ein Geschwindigkeitswert ermittelt, welcher bei der Auswertung der digitalisierten und aufaddierten Empfangsimpulse der folgenden Bursts zur Kompensation der Verbreiterung der Impulse bei hohen Objektgeschwindigkeiten herangezogen wird, so daß auch in diesen Fällen ein scharfes Impulsmaximum für die weitere Auswertung zur Verfügung steht, wobei gegebenenfalls die Empfangssignale der Bursts, bei deren Auswertung keine Kompensation der Impulsverbreiterung durchgeführt worden ist für die Ermittlung des Geschwindigkeitswertes ausgeschieden werden;

e) die rekonstruierten Empfangsimpulse auf abnorme Impulsverbreiterung zufolge des sogenannten "Stufeneffekts" überprüft werden, wobei bei Feststellung eines solchen verbreiterten Empfangsimpulses das Ergebnis dieses Bursts bzw. dieses Meßzyklus annulliert und gegebenenfalls die Anzeige und/oder Ausgabe eines Geschwindigkeitswertes unterdrückt wird.

7. Opto-elektronische Meßeinrichtung zur Durchführung des Verfahrens nach einem der vorhergehenden Ansprüche, mit einer Sendeeinrichtung (1) zur Aussendung einer Folge optischer Impulse, mit einer Empfangseinrichtung (4), die von im Strahlengang der Sendeeinrichtung (1) befindlichen Zielobjekten (107) reflektierte Signale empfängt, mit einer Signalverarbeitungsstufe (7) zur Verstärkung und Umformung der Echosignale, ferner mit einem Analog-Digitalwandler (A/D-Wandler 8) und einem elektronischen Speicher (9), in dessen Zellen die einzelnen Signalwerte (Samples) eines digitalisierten Empfangssignales abgelegt werden und die Samples weiterer digitalisierter Empfangssignale in diesen Speicherzellen aufaddiert werden, und einer Rechenstufe (5) zur Berechnung der Meßergebnisse aus der Laufzeit der Echoimpulse in Bezug auf die Sendeimpulse, wobei in der Rechenstufe (5) mittels definierter Algorithmen jeweils aus den aufaddierten Empfangssignalen ein einem Zielobjekt (107) zugeordneter Empfangsimpuls ermittelt und aus der Laufzeit dieses rekonstruierten Empfangsimpulses in Bezug auf einen zugehörigen Startimpuls ein Entfernungswert berechnet wird, wobei am Ende eines Meßzyklus aus der Vielzahl der Entfernungswerte und den zugehörigen Meßzeitpunkten ein Geschwindigkeitswert für ein Zielobjekt (107) berechnet wird, **dadurch gekennzeichnet, daß** die Sendeeinrichtung (1) zur Aussendung von Impulsfolgen in Form einer Vielzahl von Impulspaketen oder sogenannten "Bursts" (15) ausgebildet ist, welche Bursts (15) durch Impulslücken getrennt sind, und wobei in einer Stufe das Empfangssignal zu Zeitpunkten abgetastet wird, die gegenüber den einzelnen Impulsen eines Bursts (15) periodisch um ein Vielfaches von

$$d=L/n$$

phasenverschoben ist, wobei

n eine ganze Zahl, vorzugsweise 5, ist,
d die Phasenverschiebung und
L die Periodendauer der Samplefrequenz bedeutet,

so daß Samples der digitalisierten Empfangssignale gegeneinander mit einer Periode von n verkämmt sind und die wirksame Samplefrequenz um den Faktor n vergrößert ist, wobei in absoluten Werten vorzugsweise die Sendeimpulse in ihrer Phasenlage verschoben werden.

**8.** Opto-elektronische Meßeinrichtung nach Anspruch 7, **dadurch gekennzeichnet, daß** die Rechenstufe (5) einen Mikro-Prozessor (33), gegebenenfalls mit einem Datenbus (10), aufweist und der Mikro-Prozessor (33) einen RAM-Speicher (RAM) umfaßt, dessen bit-Wortbreite größer als die des A/D-Wandlers (8) ist, und daß ein Multiplexer (29) zwischen dem A/D-Wandler (8) und diesem RAM-Speicher (RAM) vorgesehen ist, welcher die vom A/D-Wandler (8) gelieferten Samples zu bit-Worten zusammenfaßt, deren Breite kleiner oder gleich der Wortbreite des RAM-Speichers (RAM) ist, wobei vorzugsweise Einrichtungen vorgesehen sind, welche bei einer gegebenen Dynamik der Signalverarbeitung eine reduzierte bit-Wortbreite des A/D-Wandlers (8) sicherstellen.

**9.** Opto-elektronische Meßeinrichtung nach Anspruch 8, **dadurch gekennzeichnet, daß** die Signalverarbeitungsstufe(n) mindestens zwei Kanäle umfaßt, wobei ein erster Kanal eine hohe Empfindlichkeit aufweist, ein anderer eine geringe Empfindlichkeit, ferner mit einer Umschalteinrichtung (28), die vom Prozessor (33) gesteuert ist und in Abhängigkeit von der Signalamplitude der ersten Impulse einer Impulsfolge den Multiplexer (29) mit dem einen oder anderen Kanal verbindet, wobei gegebenenfalls ein entsprechendes Signal zusammen mit den Meßdaten abspeicherbar ist.

**10.** Opto-elektronische Meßeinrichtung nach den Patentansprüchen 8 oder 9, **dadurch gekennzeichnet, daß** der Datenbus (10; 32) des Mikro-Prozessors (33) sowie weitere RAM-Speicher (RAM) eine geringere bit-Wortbreite aufweisen als der erste RAM-Speicher, ferner mit einer De-Multiplex-Stufe (30) des Mikro-Prozessors (33), durch welche in Impulslücken ausgelesene Samples auf die Wortbreite des Prozessors (33) und der weiteren RAM-Speicher umgeformt und in einen weiteren RAM-Speicher abgelegt werden, wobei die Samples weiterer digitalisierter Empfangssignale der Impulsfolge in den Speicherzellen dieses RAM-Speichers phasengleich oder mit einem definierten Phasenversatz in Bezug auf die Sendeimpulse aufaddierbar sind.

**Claims**

**1.** Optoelectronic measuring method, wherein a transmitting means emits a sequence of optical pulses during a measuring cycle and a receiving means receives the signals reflected from target objects situated in the path of rays of said transmitting means, said received signals being amplified, optionally converted, and digitised in a signal processing stage, individual samples of an digitised received signal being stored within cells of an electronic memory, and sampled signal values (samples) of a plurality of received signals within these memory cells being added up, by using defined algorithms determining from said sampled signal values added up a received pulse assigned to a target object so as to calculate a distance value from the time of flight thereof in relation to the assigned starting pulse, and wherein a velocity value for a target object is calculated at the end of a measuring cycle from a plurality of distance values and the assigned measuring instants, **characterised in that** the emitted pulse sequences are subdivided into a plurality of pulse packages or so-called bursts, said bursts being separated by pulse gaps, and that the received signal is sampled at instances being periodically phase-shifted with respect to the individual pulses of a burst by a multiple of

$$d=L/n$$

wherein

n    is an integer, preferably 5,

d    is the phase displacement, and

L    means the period duration of the sampling frequency,

so that samples of digitised received signals are notched relative to each other by a period of n, thus increasing the effective sampling frequency by the factor of n, wherein in absolute values preferably the phase relationship of the transmitted pulses are shifted.

2. Optoelectronic measuring method according to claim 1, **characterised in that** at least one of the following measures is carried out:

> a) one burst consists of 5 - 500, preferably 200, pulses, one measuring cycle of e.g. 0.3 - 1 sec comprising preferably 10 - 50 bursts;

> b) the pulse repeating rate amounts to 0.5 - 9 kHz in a manner known *per se*, preferably 5 kHz.

3. Optoelectronic measuring method according to claim 1 or 2, **characterised in that** a received pulse assigned to a target object is determined from the respective time discrete, digitised and added up received signals of the pulses of the preceding burst in the electronic calculator by defined algorithms during the pulse gaps in-between two bursts, and a distance value is calculated from the time-of-flight of this reconstructed received pulse in relation to the pertinent starting pulse and is stored in a memory, these distance values being read from the memory at the end of the measuring cycle, and a velocity value for a target object is calculated from the plurality of these values and the pertinent measuring instances and is output and/or indicated.

4. Optoelectronic measuring method according to claim 1 or 2, **characterised in that** a received pulse assigned to a target object is determined from the respective time discrete, digitised and added up received signals of the pulses of the preceding burst in the electronic calculator by defined algorithms during the pulse gaps in-between two bursts and is stored in a memory, these pulses being read from the memory at the end of the measuring cycle, and a velocity value for a target object is calculated from the plurality of these reconstructed values and the pertinent measuring instances and is output and/or indicated.

5. Optoelectronic measuring method according to claim 1 or 2, **characterised in that** each time a burst has been transmitted, the complete, time discrete, digitised received signals added up are stored in a memory, these received signals being read from said memory at the end of the measuring cycle, and from the plurality of these received signals respective received pulses are reconstructed, from which and the pertinent measuring instances a velocity value for the target object being calculated in a first calculating step, where it has the maximum amplitude of the pulse maximum in said received signals, and that preferably at least one of the following measures is carried out:

> a) a window of memory addresses corresponding to distance values may be defined within which samples of the received signals are used for evaluation, and that such a window may optionally defined after the first evaluation, a corrected velocity value being determined in a further calculating step;

> b) in further calculating steps, velocity values of further objects are calculated, which are in the path of rays of the transmitting means, optionally the velocity of the fastest object in the path of rays of the transmitting means being determined, independently from the pertinent signal amplitude.

6. Optoelectronic measuring method according to any of the preceding claims, **characterised in that** at least one of the following measures is carried out:

> a) a range or time window may be defined in relation to the starting pulse within which said received signal is sampled and the samples are stored so that measuring certain distance ranges may be suppressed or that a range or time window adapted to the velocity values and/or distance values is extrapolated from the first bursts, within which the received signal is sampled and the samples are stored so that measuring other distance ranges may be suppressed;

> b) apart from the distance values, further values, such as signal amplitude, the signal/noise ratio and/or statistical values, such as dispersion or the sigma values, are calculated, at least still one of the following measures being preferably provided:

>> b') from the received signal of the first burst (s), the signal amplitude and/or the signal/noise ratio is determined, and the number of pulses per burst is modified in the following bursts as a function of these values so that with large signal amplitudes or signal/noise ratios the number of pulses per burst, and thus the duration of a measuring cycle, is reduced, while with small signal amplitudes or signal/noise ratios the number of pulses per burst is increased, those received signals of bursts that have still had the smaller number of pulses per burst being optionally eliminated from determining the velocity value, preferably the first burst (s) of a measuring cycle having a number of pulses better-than-average in the case of an adaptive choice of the number of transmitted pulses per burst, so that a target distance may be determined even under unfavourable conditions in order to be able to determine the parameters in an appropriate manner, optionally as well as a range gate or window, derived from it for the following measuring operations;

b") from the received signal of the first bursts, a signal's characteristic is determined, such as the distance value, the signal amplitude and/or the signal/noise ratio, and then the number of bursts per measuring cycle is modified as a function of said signal's characteristic so that with large distance values, large signal amplitudes or signal/noise ratios and/or small dispersions of the measuring values the number of bursts per measuring cycle is diminished, thus reducing the duration thereof, while with small distance values and/or small signal amplitudes and/or signal/noise ratios and/or large dispersions of the measuring values the number of bursts per measuring cycle is increased;

c) determining the velocity value is carried out by at least two calculating steps, in the first calculating step a first mean value being calculated and results of individual bursts which deviate from this first mean value by a magnitude higher than a given, optionally adjustable, threshold value being eliminated, thus not being considered in a subsequent calculation of a second mean value;

d) received pulses are reconstructed from the digitised received signals added up of at least the first two bursts, and in connection with the pertinent starting pulses and measuring instances a velocity value is determined which is used, when evaluating the digitised received signals added up of the following bursts, for compensating the widening of pulses with high object velocities so that even in these cases a sharp pulse maximum is available for further evaluation, the received signals of the bursts, in whose evaluation no compensation of pulse widening has been carried out, being optionally eliminated from determining the velocity value;

e) the reconstructed received signals are checked for an abnormal pulse widening due to the so-called "step effect", and, when determining such a widened received pulse, annulling the result of this burst or this measuring cycle, optionally suppressing any display and/or output of a velocity value.

7. Optoelectronic measuring device for carrying out the method according to any of the preceding claims, comprising transmitting means (1) for emitting a sequence of optical pulses, receiving means (4) which receives the signals reflected from target objects (107) situated in the path of rays of said transmitting means (1), a signal processing stage (7) for amplifying and converting the echo signals, an analogue/digital converter (A/D converter 8) and an electronic memory (9) in whose cells the individual signal values (samples) of a digitised received signals are stored, the samples of further digitised received signals being added up in these memory cells, and a calculating stage (5) for calculating the measuring results from the time-of-flight of the echo pulses in relation to the transmitted pulses, a respective received pulse assigned to a target object (107) being determined in said calculating stage (5) by defined algorithms from the respective received signals having been added-up, and a distance value is calculated from the time-of-flight of this reconstructed received pulse in relation to a pertinent starting pulse, and a velocity value for a target object (107) being calculated at the end of a measuring cycle from the plurality of distance values and the assigned measuring instances, **characterised in that** the transmitting means (1) is adapted for emitting pulse sequences in the form of a plurality of pulse packages or so-called "bursts" (15), said bursts (15) being separated by pulse gaps, the received signal being sampled in a stage at instances which are periodically phase-shifted with respect to the individual pulses of a burst (15) by a multiple of

$$d = L/n$$

wherein

n     is an integer, preferably 5,
d     is the phase displacement, and
L     means the period duration of the sampling frequency,

so that samples of digitised received signals are notched relative to each other by a period of n, thus increasing the effective sampling frequency by the factor of n, wherein in absolute values preferably the phase relationship of the transmitted pulses are shifted.

8. Optoelectronic measuring device according to claim 7, **characterised in that** the calculating stage (5) comprises a microprocessor (33), optionally including a data bus (10), and said microprocessor (33) comprises a RAM memory (RAM) whose bit word capacity is larger than that of the A/D converter (8), and that multiplexing means (29) are provided between said A/D converter (8) and the RAM memory (RAM) which combine the samples supplied by said A/D converter (8) into bit words, the capacity of which being smaller or equal to the word capacity of the RAM memory (RAM), means being preferably provided which, with given dynamics of signal processing, ensure a reduced bit word capacity of said A/D converter (8).

9. Optoelectronic measuring device according to claim 8, **characterised in that** said signal processing stage(s) comprise(s) at least two channels, a first channel being of a high sensitivity, another one of lower sensitivity, further comprising switching-over means (28) controlled by said processor (33) to connect said multiplexing means (29) with one or the other channel in dependence upon the signal amplitude of the first pulses of a pulse sequence, a corresponding signal being optionally storable together with the measuring data.

10. Optoelectronic measuring device according to claim 8 or 9, **characterised in that** said data bus (10; 32) of said microprocessor (33) as well as further RAM memories (RAM) have a smaller bit word capacity that said first RAM memory, further comprising a demultiplexing stage (30) of said microprocessor (33) by which samples read during pulse gaps are converted to the word capacity of the processor (33) and the further RAM memories and are stored in a further RAM memory, samples of further digitised received signals of the pulse sequence being able to be added up within the memory cells of this RAM memory either inphase or with a defined phase-shift in relation to the transmitted pulses.

## Revendications

1. Procédé de mesure optoélectronique, dans lequel un moyen de transmission émet un train d'impulsions optiques pendant un cycle de mesure et un moyen récepteur reçoit les signaux réfléchis par des objets de visée situés dans la marche des rayons du moyen de transmission, et dans lequel lesdits signaux reçus sont amplifiés dans un étage de traitement de signaux, le cas échéant après être convertis, et sont numérisés, les échantillons individuels d'un signal reçu numérisé étant enregistrés dans les cellules d'un mémoire électronique et les valeurs de signal (échantillonnage) échantillonnés de plusieurs signaux reçus étant totalisé dans ces cellules de mémoire et une impulsion reçue attribuée à un objet de visée étant déterminée des valeurs d'échantillonnage totalisés au moyen des algorithmes définis, et on calcule un valeur de distance de la durée de parcours desquels relativement à l'impulsion de départ appartenante, et dans lequel un valeur de vélocité pour un objets de visée est calculé de la multitude des valeurs de distance et les moments de mesure appartenants au fin d'un cycle de mesure, **caractérisé en ce que** les trains d'impulsions émis sont divisés en une multitude de paquets d'impulsions dits "Bursts", lesdits Bursts étant séparés par des interstices d'impulsion, et que le signal reçu est échantillonné aux moments, qui sont déphasés périodiquement relativement aux impulsions individuelles d'un Burst par un multiple de

$$d = L/n$$

dans lequel

n    est un nombre entier, préférablement 5,
d    signifie la déphasage, et
L    la durée de période de la fréquence d'échantillonnage,

de manière que les échantillons des signaux reçus numérisés sont arrangés à tenon et entaille relativement l'un à l'autre avec une période de n, et la fréquence d'échantillonnage effective est agrandie par le facteur de n, et qu'en des valeurs absolus de préférence ce sont les impulsions de transmission, dont la relation des phases est décalée.

2. Procédé de mesure optoélectronique selon la revendication 1, **caractérisé en ce qu'**au moins une des mesures suivantes est mise en oeuvre:

   a) un Burst consiste de 5-500, préférablement de 200, impulsions, un cycle des mesure, de p. e. 0,3-1 sec, comprenant de préférence 10-50 Bursts;
   b) la fréquence de répétition d'impulsions, d'une manière connue en soi, se monte à 0,5-9 kHz, préférablement 5 kHz.

3. Procédé de mesure optoélectronique selon la revendication 1 ou 2, **caractérisé en ce qu'**une impulsion reçue appartenante à un objet de visée est déterminée par des algorithmes définis dans le calculateur électronique pendant les interstices d'impulsion entre deux Bursts des signaux reçus respectives discrètes en temps, numérisés et totalisés des impulsions des Bursts précédents, et que l'on calcule un valeur de distance de la durée de parcours de ladite impulsion reçue reconstruite par rapport à l'impulsion de départ associée, ledit valeur étant enregistré dans un mémoire, et que l'on lit lesdits valeurs de distance du mémoire à la fin d'un cycle de mesure, et que l'on calcule, sort et/ou affiche un valeur de vélocité pour un objet de visée de la multitude de ces valeurs et les moments de mesure appartenants.

4. Procédé de mesure optoélectronique selon la revendication 1 ou 2, **caractérisé en ce qu'**une impulsion reçue adjointe à un objet de visée est déterminée par des algorithmes définis dans le calculateur électronique pendant les interstices d'impulsion entre deux Bursts des signaux reçus respectives discrètes en temps, numérisés et totalisés des impulsions des Bursts précédents, et est enregistrée dans un mémoire, lesdites impulsions étant lues du mémoire à la fin d'un cycle de mesure, et que l'on calcule, sort et/ou affiche un valeur de vélocité pour un objet de visée de la multitude de ces impulsions reconstruites et les moments de mesure appartenants.

5. Procédé de mesure optoélectronique selon la revendication 1 ou 2, **caractérisé en ce que** les signaux reçus complètes, discrètes en temps, numérisés et totalisés sont enregistrés dans un mémoire après chaque transmission d'un Burst, lesdits signaux reçus étant lus du mémoire à la fin d'un cycle de mesure, on reconstruit des impulsions reçues de la multitude desdites signaux reçus, et que l'on calcule, dans une première étape de calcul, le valeur de vélocité pour un objet de visée desdits impulsions reçues reconstruites et des moments de mesure appartenants, qui comprend l'amplitude maximum du maximum d'impulsion dans les signaux reçus, et que préférablement au moins une des mesures suivantes est mise en oeuvre:

a) une fenêtre d'adresses de mémoire peut être définie, qui correspondent aux valeurs de distances, dans laquelle on utilise des échantillons des signaux reçus pour l'évaluation, une telle fenêtre, le cas échéant, pouvant être définie après la première évaluation, un valeur de vélocité corrigé étant déterminé dans une autre étape de calcul;

b) des valeurs de vélocité d'autres objets se trouvant dans la marche des rayons du moyen de transmission sont calculés par des autres étapes de calcul, le cas échéant en déterminant la vélocité de l'objet le plus rapide, qui se trouve dans la marche des rayons du moyen de transmission, à savoir indépendamment de l'amplitude de signal appartenant.

6. Procédé de mesure optoélectronique selon une des revendications précédentes, **caractérisé en ce qu'**au moins une des mesures suivantes est mise en oeuvre:

a) une fenêtre de distance ou de temps peut être définie par rapport à l'impulsion de départ, dans laquelle on échantillonne le signal reçu et/ou des échantillons sont mémorisés de manière que l'on peut supprimer la mesure dans certaines zones de distance, ou que l'on extrapole une fenêtre de distance ou de temps adaptée aux valeurs de vélocité et/ou de distance des Bursts premiers, dans laquelle on échantillonne le signal reçu et/ou mémorise les échantillons, de manière que l'on peut supprimer la mesure dans des autres zones de distance;

b) outre les valeurs de distance, on calcule des autres valeurs, comme l'amplitude de signal, le rapport signal/bruit et/ou des valeurs statistiques, comme la dispersion et/ou les valeurs Sigma, et de préférence on met au moins une des mesures suivantes en oeuvre:

b') on détermine l'amplitude de signal et/ou le rapport signal/bruit du signal reçu du ou des Burst(s) premier(s), et on change le nombre d'impulsions par Burst dans les Bursts suivants en fonction de ces valeurs de manière, que le nombre d'impulsions par Burst, et par cela la durée d'un cycle de mesure, est réduit(e) si les amplitudes des signaux ou le rapport signal/bruit sont (est) grand(es), tandis que le nombre d'impulsions par Burst est augmenté(e) si les amplitudes des signaux ou le rapport signal/bruit sont (est) petit(es), le cas échéant ceux signaux reçus des Bursts, qui ont compris le plus petit nombre d'Impulsions/Burst, sont éliminés de la détermination du valeur de vélocité, et de préférence, dans le cas d'un choix adaptatif du nombre des impulsions de transmission par Burst, le ou les premier(s) Burst(s) d'un cycle de mesure comprend ou comprennent un nombre d'impulsions supérieur à la moyenne de manière qu'une distance de visée peut être déterminé même sous des conditions défavorables, pour être capable à déterminer d'une façon appropriée, en y dérivant, les paramètres ainsi que, le cas échéant, une porte ou fenêtre de distance, pour les mesures suivantes;

b") du signal reçu des premiers Bursts on détermine une caractéristique de signal, comme le valeur de distance, l'amplitude du signal et/ou le rapport signal/bruit, et puis on change le nombre des Bursts par cycle de mesure en fonction de cette caractéristique de signal, de manière que le nombre des Bursts par cycle de mesure, et par cela la durée de celui-ci, est réduit(e) si les valeurs de distance, les amplitudes des signaux et/ou le rapport signal/bruit sont (est) grand(es) ou la dispersion des valeurs mesurés est petite, tandis que le nombre des Bursts est augmenté si les valeurs de distance, les amplitudes des signaux et/ou le rapport signal/bruit sont (est) petit(s) ou la dispersion des valeurs mesurés est grande;

c) la détermination du valeur de vélocité est accomplie au moyens d'au moins deux étapes de calcul, dans lesquelles on calcule un premier valeur moyen dans la première étape de calcul en éliminant les résultats des Bursts individuels, qui s'écartent par rapport audit premier valeur moyen par un valeur plus grand qu'un valeur de seuil donné, le cas échéant ajustable, et on calcule un deuxième valeur moyen sans en avoir égard dans l'étape de calcul suivant;

d) on reconstruit des impulsions reçues des signaux reçus numérisés et totalisés au moins des premiers deux Bursts, et en connexion avec les impulsions de départ et les moments de mesure appartenants on en détermine un valeur de vélocité, qui est utilisé lors de l'évaluation des impulsions reçues numérisées et totalisées des Bursts suivants pour compenser l'élargissement des impulsions en cas de grandes vélocités d'un objet, de façon que même dans ces cas un maximum d'impulsion aigu est à la disposition pour la continuation de l'évaluation, ceux signaux reçus, pour lesquels pas de compensation de l'élargissement d'impulsion a été exécutée, sont éliminés, le cas échéant, de la détermination du valeur de vélocité;

e) on examine les impulsions reçues construites pour un l'élargissement d'impulsion par suite d'un effet dit "effet d'échelon", et si l'on détermine une telle impulsion élargie, on annule le résultat de ce Burst et/ou de ce cycle de mesure et, le cas échéant, on supprime l'affichage et/ou la sortie d'un valeur de vélocité.

7. Dispositif de mesure optoélectronique pour l'exécution du procédé selon une des revendications précédentes, comprenant un moyen de transmission (1) pour émettre un train d'impulsions optiques, un moyen récepteur (4), qui reçoit les signaux réfléchis des objets de visée (107) situés dans la marche des rayons du moyen de transmission (1), un étage de traitement des signaux (7) pour amplifier et convertir les signaux écho, de plus ayant un convertisseur analogique-numérique (ADU 8) et un mémoire électronique (9), dans les cellules duquel on enregistre les valeurs de signal (échantillons) individuels d'un signal reçu numérisé et on totalise les échantillons d'autres signaux reçus numérisés dans lesdites cellules de mémoire, et un étage de calcul (5) pour calculer les résultats de mesure de la durée de parcours des impulsions écho par rapport aux impulsions de transmission en déterminant dans l'étage de calcul (5) une impulsion reçue appartenante à un objet de visée (107) des signaux reçus totalisés au moyen des algorithmes définis et en calculant un valeur de distance de la durée de parcours de cette impulsion reconstruite par rapport à une impulsion de départ appartenante et en calculant à la fin d'un cycle de mesure un valeur de vélocité pour un objet de visée (107) de la multitude des valeurs de distance et des moments de mesure appartenants, **caractérisé en ce que** le moyen de transmission (1) est capable d'émettre des trains d'impulsions en forme d'une multitude de paquets d'impulsions dits "Bursts" (15), lesdits Bursts (15) étant séparés par des interstices d'impulsion, et que le signal reçu est échantillonné dans un étage aux moments, qui sont déphasés périodiquement relativement aux impulsions individuelles d'un Burst (15) par un multiple de

$$d=L/n$$

dans lequel

n  est un nombre entier, préférablement 5,
d  signifie la déphasage, et
L  la durée de période de la fréquence d'échantillonnage,

de manière que les échantillons des signaux reçus numérisés sont arrangés à tenon et entaille relativement l'un à l'autre avec une période de n, et la fréquence d'échantillonnage effective est agrandie par le facteur de n, et qu'en des valeurs absolues de préférence ce sont les impulsions de transmission, dont la relation des phases est décalée.

8. Dispositif de mesure optoélectronique selon la revendication 7, **caractérisé en ce que** l'étage de calcul (5) comprend un microprocesseur (33), le cas échéant avec un bus de données (10), le microprocesseur (33) incluant un mémoire RAM (RAM), dont la largeur de mot en bit est plus grande que cela du convertisseur analogique-numérique (8), et qu'un multiplexeur (29) est prévu entre le convertisseur analogique-numérique (8) et ledit mémoire RAM (RAM), qui combine les échantillons fournis par le convertisseur analogique-numérique (8) pour former des mots en bits, la largeur desquelles étant plus petite ou égale à la largeur de mot du mémoire RAM (RAM), des dispositifs étant préférablement prévus, qui, avec une dynamique donnée du traitement des signaux, assurent une largeur de mot en bit réduite du convertisseur analogique-numérique (8).

9. Dispositif de mesure optoélectronique selon la revendication 8, **caractérisé en ce que** l'étage ou les étages de traitement des signaux comprend (comprennent) au moins deux voies, une première voie ayant une sensibilité élevée, tandis que l'autre a une sensibilité plus basse, le dispositif ayant de plus un dispositif renverseur (28) contrôlé par le processeur (33), qui connecte le multiplexeur (29) à l'une ou l'autre voie en fonction de l'amplitude de signal des premières impulsions d'un train d'impulsions, un signal correspondant étant, le cas échéant, enregistrable avec les données de mesures.

10. Dispositif de mesure optoélectronique selon les revendications 8 ou 9, **caractérisé en ce que** le bus de données (10; 32) du microprocesseur (33) ainsi que des autres mémoires RAM (RAM) ont une largeur de mot en bit plus petite, que le premier mémoire RAM, et que le dispositif comprend de plus un étage démultiplexeur (30) du microprocesseur (33), par lequel des échantillons lus pendant les interstices d'impulsion sont convertis à la largeur de mot du processeur (33) et des autres mémoires RAM et sont enregistrés dans un autre mémoire RAM, les échantillons des autres signaux reçus numérisés du train d'impulsions pouvant être totalisés dans les cellules de mémoires de ce mémoire RAM soit en phase ou bien soit avec une déphasage défini relativement aux impulsions de transmission.

FIG. 1

EP 1 012 627 B1

FIG. 2

FIG. 3

FIG. 4

ZEITL. ABZÄHLBARES DIGITALISIERTES ECHO-SIGNAL

19 — GERÄUSCH-KALKULATOR

SCHWELL.WERT

20 — ZIEL-ERFASSER

PARAMETER-FILTER

21 — ADAPTIVES DIGITALES FILTER

22 — LAUFZEIT-KALKULA-TOR

23 — SIGNAL-STÄRKE-KALKULATOR

24 — PULS-BREITEN-KALKULATOR

25 — GERÄUSCH-ABSTAND-KALKULATOR

12 — ROHDATENSPEICHER

FIG. 5

FIG. 6

FIG. 7

26

$V_T=0$

27

$V_T\neq0$

EP 1 012 627 B1

PROGRAMMIERBARER VERZÖGERUNGS-GENERATOR

6

LASER-SENDE-ELEKTRONIK

1

1a

2

54

TAKT-GENERATOR

55

S/H & ADC

8

VERSTÄRKER & ANALOGSIGNAL-VERARBEITUNG

7

4

3

NIEDER-SPANNUNGS-EINHEIT

52

µC

5

SPEICHER FÜR ABGETASTETES ECHO-SIGNAL

9

DISPLAY

13

HOCHSPANNUNGS-ZUFUHR

51

53

A/D-CONVERTER

ROHDATEN-SPEICHER

12

PROGRAMM-SPEICHER

11

SCHNITTSTELLE

14

10

HAUPT-SCHALTER

48

49

53a  53b  53c

33

50

FIG. 8

FIG. 9

```
5.21M    8.7KM/H
13H27       177°
45.381N  15.215
```

GPS

FIG. 10

521m  135KM/H

13H27  21.12.97

103
101
102
100
104
99

FIG. 11a

108 105

92

| E | V | SP | T | R | C | — 109

107

FIG. 11b

111 106

110

112

| E | V | SP | T | R | C | — 109

| E | | | T | R | C | — 113

FIG. 11c

DATEN

114

PRÜFDATEN

| E | V | SP | T | R | C |

| E | | | T | R | C |

| G | P | S | | | C |

**FIG. 12**

FIG. 13

A/D
WANDLER 1
8a

A/D
WANDLER 2
8b

UMSCHALTER
28

60 M Samples

MULTIPLEXER
4:1
29

15 M Samples

24 BIT
RAM
11a

PROGR
SPEICHER
11b

µC
5

DE-
MULTIPLEXER
30

16 BIT
SPEICHER
9

16 BIT
SPEICHER
12

31

DISPLAY
13

32

INTERFACE
14

FIG. 14

PHOTO-
DIODEN-
EMPFÄNGER

4

VERSTÄRKER

34

SIGNAL-
KOMPRESSOR

7a

SIGNAL-
KOMPRESSOR

7b

A/D-WANDLER
LOW LEVEL
KANAL

8a

A/D-WANDLER
HIGH LEVEL
KANAL

8b

FIG. 15

## FIG. 16

TOF ... LAUFZEIT

**FIG. 17**

```
Strom EIN
   │
   ▼
EIN-schalten „Niederspannungs-" und „Hochspannungsversorgung"
   │
   ▼
Interner Selbsttest
   │
   ▼
AUS-schalten „Niederspannungs-" und „Hochspannungsversorgung"
   │
   ▼
Trigger-Taste gedrückt ?  ── nein ──┐
   │ ja                              │
   ▼                                 │
Display zurücksetzen                 │
   │                                 │
   ▼                                 │
EIN-schalten „Niederspannungs-" und „Hochspannungsversorgung"
   │                                 │
   ▼                                 │
Verzögerung                          │
   │                                 │
   ▼                                 │
Führe Entf./Geschw.-Messungen durch  │
   │                                 │
   ▼                                 │
Prüfe Batteriezustand                │
   │                                 │
   ▼                                 │
AUS-schalten „Niederspannungs-" und „Hochspannungsversorgung"
   │                                 │
   ▼                                 │
Zeige Ergebnisse an ─────────────────┘
```